# EUROPEAN PATENT APPLICATION

(11) **EP 3 930 357 A1**
(43) Date of publication of application: **29.12.2021**
(21) Application number: 20782927.6
(22) Date of filing: 23.03.2020
(51) Int. Cl.: H04W 4/70

(54) **LATENCY ACQUISITION METHOD AND APPARATUS, AND OPTIMIZATION METHOD AND APPARATUS**

(30) Priority: 31.03.2019 CN 201910254689
(71) Applicant: Huawei Technologies Co., Ltd., Shenzhen, Guangdong 518129 (CN)
(72) Inventor: LI, Xianming, Shenzhen, Guangdong 518129 (CN); CAO, Longyu, Shenzhen, Guangdong 518129 (CN); WANG, Yaoguang, Shenzhen, Guangdong 518129 (CN); YU, Yijun, Shenzhen, Guangdong 518129 (CN)
(74) Representative: Gill Jennings & Every LLP
(86) International application number: PCT/CN2020/080710
(87) International publication number: WO 2020/199960

(57) **Abstract**

This application relates to the field of communication technologies, and discloses a latency obtaining method and apparatus, and a latency optimization method and apparatus, to resolve a problem in a current technology that a latency in a data transmission process cannot be optimized because a test cannot be performed by segment. The latency obtaining method includes: A first device sends a request message to a second device, where the request message is used to obtain latency data of a transmission subpath between the second device and a third device, and a transmission path can be directly established between the third device and the second device; the first device receives a response message sent by the second device, where the response message includes the latency data of the transmission subpath between the second device and the third device; and the first device stores a correspondence between the transmission subpath and the latency data, where the transmission subpath is represented based on a device identifier group including an identifier of the second device and an identifier of the third device. In this application, latency data between devices that can directly establish transmission paths to each other is separately obtained, so that the latency data can be obtained by segment.

## Description

### CROSS-REFERENCE TO RELATED APPLICATIONS

This application claims priority to Chinese Patent Application No. 201910254689.3, filed with the Chinese Patent Office on March 31, 2019 and entitled "LATENCY OBTAINING METHOD AND APPARATUS, AND LATENCY OPTIMIZATION METHOD AND APPARATUS", which is incorporated herein by reference in its entirety.

### TECHNICAL FIELD

Embodiments of this application relate to the field of communication technologies, and in particular, to a latency obtaining method and apparatus, and a latency optimization method and apparatus.

### BACKGROUND

Mobile internet and internet of things technologies have led to rapid growth in services such as autonomous driving and telemedicine. To meet new requirements and new features of these services on a network, 5th generation (5G) mobile communication has become an R&D hotspot in the global communication industry. Ultra-reliable low-latency communication (ultra reliable low latency communication, URLLC), one of typical scenarios in 5G, is a challenge to R&D. How to ensure a millisecond-level E2E latency during end-to-end (end to end, E2E) data transmission is a key problem to be resolved in 5G, and is one of main features that distinguish 5G from 4G.

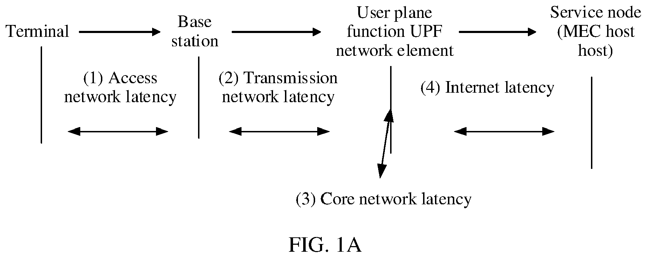

FIG. 1A shows compositions of a total latency from a terminal to an application (application, APP) in a typical 5G architecture, where the APP may be understood as a service accessed by the terminal, for example, a WeChat service accessed by the terminal. In FIG. 1A, a multi-access edge computing (multi-access edge computing, MEC) service is used as an example. An APP that provides the MEC service is deployed on an MEC host host. The MEC host may be understood as a service node. A data transmission latency from the terminal to the APP may be divided into four parts: (1) an access network latency from the terminal to a radio access network (radio access network, RAN), that is, a base station, (2) a transmission network latency from the base station to a user plane function (user plane function, UPF) network element of a core network, (3) a data processing latency in the core network, and (4) an internet latency from the UPF of the core network to the MEC host. Because a deployment location of the service node is usually independent of a deployment location of a mobile network, an E2E latency discussed in the standard and the industry usually does not include the internet latency (4) in FIG. 1A.

In a current technology, there is only a method for testing a latency from the terminal to the UPF. Specifically, the method is to add a new protocol layer from the terminal to the UPF, to test a total latency from the terminal to the UPF. The test cannot be performed by segment, and the latency cannot be optimized.

### SUMMARY

Embodiments of this application provide a latency obtaining method and apparatus, and a latency optimization method and apparatus, to resolve a problem in a current technology that a latency in a data transmission process cannot be optimized because a test cannot be performed by segment.

According to a first aspect, a latency obtaining method is provided. A first device may send a request message to a second device, where the request message is used to obtain latency data of a transmission subpath between the second device and a third device, and a transmission path can be directly established between the second device and the third device. The transmission path herein is a path for transmission of user data, and both the second device and the third device are user plane devices. After the second device receives the request message sent by the first device, the second device may test latency data of a transmission subpath between the second device and each third device. For example, the latency data may be a value of duration that lasts from sending a data packet from one device to another device to receiving an acknowledgment data packet returned by the another device, or may be an average value of values of duration that lasts from sending data packets to receiving the data packets. The second device may alternatively test latency data of a transmission subpath between the second device and each third device in advance. The second device sends a response message to the first device, where the response message includes the latency data of the transmission subpath between the second device and each third device. In the response message, a transmission path between the second device and the third device may be represented based on a device identifier group including an identifier of the second device and an identifier of the third device. After receiving the latency data, of the transmission subpath, sent by the second device, the first device may store a correspondence between the transmission subpath and the latency data. If the transmission subpath is represented based on the device identifier group including the identifier of the second device and the identifier of the third device, the storing a correspondence between the transmission subpath and the latency data means storing a correspondence between the latency data, and the identifier of the second device and the identifier of the third device. One correspondence includes only an identifier of one second device and an identifier of one third device.

Because the transmission path can be directly established between the second device and the third device, that is, in a data transmission process, the second device and the third device are two logically adjacent devices, when a terminal accesses a service from a service node, a data packet needs to be transmitted by a plurality of devices, and a plurality of latency segments exist. In this application, latency data between devices that can directly establish transmission paths to each other is separately obtained, so that the latency data can be obtained by segment.

In a possible implementation, if the second device is an access network device, the third device is a core network device; if the second device is an access network device, the third device is a terminal device; or if the second device is a core network device, the third device is also a core network device. The access network device may be, for example, a base station, and the core network device may be, for example, a user plane function UPF network element.

In a possible implementation, a centralized unit (centralized unit, CU) and a distributed unit (distributed unit, DU) in the base station are separately deployed, and a control plane (control plane, CP) and a user plane (user plane, UP) are separately deployed. The core network device includes a first UPF and a second UPF. The first UPF is a device that directly establishes a transmission path to the access network device, and the second UPF is a device that does not directly establish a transmission path to the access network device. The second device may be a CU-UP, and the third device is the DU or the first UPF; the second device may be the DU, and the third device is the terminal; or the second device is the first UPF, and the third device is the second UPF.

In a possible implementation, when the DU or the base station tests latency data between the DU or the base station and terminals, because there are a large quantity of terminals, if latency data between each terminal and the DU or the base station is tested, it is clearly unreasonable and infeasible. Therefore, if the third device is a terminal, identifiers of all third devices in the correspondence that is between the transmission subpath and the latency data and that is stored by the first device may be the same. In other words, that the third device is which terminal is not distinguished, an identifier of a terminal in the correspondence is merely used to indicate that the third device is the terminal, and the latency data of the transmission subpath between the DU or the base station and the terminal may be an average value of latency values between the DU or the base station and a plurality of terminals.

In a possible implementation, the second device is a user plane device. When sending the request message to the second device, the first device may forward the request message to the second device by using standardized signaling between a control plane device and the second device, or the first device may receive, by using the control plane device, the response message sent by the second device. A control plane device corresponding to the CU-UP or the DU is a control plane CU-CP network element. If the second device is the CU-UP or the DU, when the first device sends the request message to the second device, the first device may send the request message to the CU-CP, and the CU-CP sends the request message to the second device; when the first device receives the response message sent by the second device, the first device may receive the response message sent by the CU-CP, and the response message is sent by the second device to the CU-CP. A control plane device corresponding to the UPF is a session management function (session management function, SMF) network element. If the first device is the first UPF, when the first device sends the request message to the second device, the first device may send the request message to the SMF, and the SMF sends the request message to the second device; when the first device receives the response message sent by the second device, the first device may receive the response message sent by the SMF, and the response message is sent by the second device to the SMF. When sending the request message to the second device, the CU-CP or the SMF may directly forward the request message, or may encapsulate the request message into another existing message and send the another existing message to the second device. When sending the response message to the first device, the CU-CP or the SMF may directly forward the response message, or may encapsulate the response message into another existing message and send the another existing message to the first device.

According to a second aspect, a latency optimization method based on the latency obtaining method in the first aspect is provided. A fourth device sends a request message to a first device, and the first device receives the request message sent by the fourth device, where the request message is used to obtain a first transmission path that meets a latency requirement of a terminal service, the first transmission path requested in the request message may be a transmission path between a terminal and a core network device, and the request message includes an identifier of each device managed by the fourth device. The first device determines, based on the identifier that is of each device and that is included in the request message and a stored correspondence between a plurality of transmission subpaths and latency data, a plurality of transmission subpaths corresponding to latency data that can meet the latency requirement, where the determined plurality of transmission subpaths form a target first transmission path.

In a possible implementation, the target first transmission path includes a plurality of transmission subpaths, and device identifier groups that respectively and correspondingly represent the plurality of transmission subpaths each include an identifier of a fifth device managed by the fourth device, where the identifier of the fifth device is an identifier that is of a device and that is included in the request message. The fifth device is a device on the transmission path between the terminal and the core network device. The first device may send a response message to the fourth device, where the response message includes the identifier of the fifth device and an identifier that is of another device and that forms a device identifier group with the identifier of the fifth device. The fourth device receives the response message sent by the first device, and the fourth device controls, based on the response message, the fifth device to establish a transmission path to the another device, where the established transmission path is used for transmission of the terminal service. The fourth device may be an SMF, and a plurality of devices managed by the fourth device are a plurality of first UPFs; or the fourth device may be a CU-CP, and a plurality of devices managed by the fourth device are a plurality of CU-UPs.

The first device selects a plurality of device identifiers corresponding to a transmission path that meets the latency requirement of the terminal service, and a transmission path established by a plurality of devices meets the latency requirement of the terminal service, so that a latency of service data transmission can be optimized.

In a possible implementation, if the fourth device is an SMF, a plurality of devices managed by the fourth device included in the request message are a plurality of first UPFs. The first device may send a response message to the fourth device, where the response message includes device identifier groups that respectively and correspondingly represent the plurality of transmission subpaths that form the target first transmission path. The fourth device respectively sends the device identifier groups in the response message to different management devices that each can control a device corresponding to each device identifier in the device identifier group to establish a transmission path, and the different management devices each control the device corresponding to each device identifier to establish the transmission path, where the established transmission path is used for transmission of the terminal service.

A plurality of device identifiers corresponding to a transmission path that meets the latency requirement of the terminal service are selected, and a transmission path established by a plurality of devices meets the latency requirement of the terminal service, so that a latency of service data transmission can be optimized.

Because a transmission path is established between devices that meet the latency requirement of the terminal service, a latency in a data transmission process is optimized, and fast service transmission of the terminal can be ensured.

According to a third aspect, a latency optimization method based on the latency obtaining method in the first aspect is provided. A fourth device sends a request message to a first device, where the request message is used to obtain latency data of a first transmission subpath, the request message includes an identifier of each seventh device managed by the fourth device, and the first transmission subpath is a transmission subpath represented by a device identifier group in which the identifier of the seventh device is located. Correspondingly, the first device receives the request message sent by the fourth device. If the fourth device is an SMF, the seventh device may be a first UPF; or if the fourth device is a CU-CP, the seventh device may be a CU-UP. The first device determines, based on a pre-stored transmission subpath, the device identifier group in which the identifier, of the seventh device, in the request message is located, and sends a response message to the fourth device, where the response message includes a device identifier group used to represent each first transmission subpath, and latency data corresponding to the first transmission subpath. The device identifier group that is used to represent each first transmission subpath and that is in the response message is the device identifier group in which the identifier of the seventh device is located. The fourth device selects a target device identifier group from at least one device identifier group in the response message based on a latency requirement of a terminal service, and controls a target seventh device in the target device identifier group to establish a transmission path to another device, where the established transmission path is used for transmission of the terminal service.

Because a transmission path is established between devices that meet the latency requirement of the terminal service, a latency in a data transmission process is optimized, and fast service transmission of the terminal can be ensured.

In a possible implementation, if the fourth device is an SMF, the seventh device may be a first UPF, and a device identifier group in which an identifier of the first UPF is located may be a device identifier group including an identifier of a CU-UP and the identifier of the first UPF, or may be a device identifier group including the identifier of the first UPF and an identifier of a second UPF. The response message may further carry another transmission subpath and latency data corresponding to the another transmission subpath, for example, carry a device identifier group used to represent a transmission subpath between a terminal and a DU, and latency data corresponding to the transmission subpath, for example, carry a device identifier group that represents a transmission subpath between the CU-UP and the DU, and latency data corresponding to the transmission subpath.

In a possible implementation, if the fourth device is a CU-CP, the seventh device may be a CU-UP, and a device identifier group in which an identifier of the CU-UP is located may be a device identifier group including the identifier of the CU-UP and an identifier of a first UPF, or may be a device identifier group including the identifier of the CU-UP and an identifier of a DU. The response message may further carry another transmission subpath and latency data corresponding to the another transmission subpath, for example, carry a device identifier group used to represent a transmission subpath between a terminal and a DU, and latency data corresponding to the transmission subpath, for example, carry a device identifier group that represents a transmission subpath between a second UPF and the first UPF, and latency data corresponding to the transmission subpath. Because a transmission path is established between devices that meet the latency requirement of the terminal service, a latency in a data transmission process is optimized, and fast service transmission of the terminal can be ensured.

According to a fourth aspect, a latency optimization method based on the latency obtaining method in the first aspect is provided. An MEC application orchestrator (MEC application orchestrator, MEAO) may deploy a device instance based on latency data, and the MEAO may send a request message to a first device, where the request message includes identifiers of a plurality of sixth devices, a type of each sixth device is the same as a type of a to-be-deployed device, the request message is used to obtain latency data of a second transmission path, and the second transmission path is a transmission path between a terminal and a sixth device corresponding to an identifier in the request message. The sixth device may be a first UPF. The first device receives the request message sent by the MEAO. The first device calculates latency data of each second transmission path based on obtained latency data corresponding to transmission subpaths and an identifier that is of each sixth device and that is in the request message. The first device sends a response message to the MEAO, where the response message includes a plurality of second transmission paths and latency data corresponding to each second transmission path, and each second transmission path is represented based on a plurality of device identifier groups. In this case, a plurality of device identifier groups that respectively and correspondingly represent a plurality of transmission subpaths that form each second transmission path include an identifier of one sixth device. The MEAO selects, based on the latency data corresponding to each second transmission path in the response message, a target second transmission path that meets a latency requirement of a terminal service. There may be one or more target second transmission paths that meet the latency requirement of the terminal service. Each target second transmission path corresponds to an identifier of one sixth device. A terminal may select an identifier of a target sixth device from at least one identifier of at least one sixth device corresponding to at least one target second transmission path, and determine, based on location information corresponding to the identifier of each sixth device, target location information corresponding to the selected identifier of the target sixth device, where the location information corresponding to the identifier of each sixth device may be pre-stored in the MEAO, or may be stored in a third-party storage medium. The MEAO deploys a device of the same type as the sixth device at the target location information.

During device deployment, a deployment location may be selected by using previously tested latency data of each transmission subpath, so that the deployment location meets a service requirement of a terminal, and a latency in a data transmission process is optimized.

In a possible implementation, the MEAO may deploy a service platform on a service node, then obtain latency data of a transmission path between the service platform on the service node and the deployed device of the same type as the sixth device, and determine latency data of a target second transmission path between the terminal and the target sixth device based on latency data corresponding to a second transmission path between each terminal and the sixth device in the response message. The MEAO determines, based on the latency data of the transmission path between the terminal and the target sixth device and the obtained latency data of the transmission path between the service node and the deployed device of the same type as the sixth device, whether latency data of a transmission path between the terminal and the service node meets the latency requirement of the terminal service. If the latency data of the transmission path between the terminal and the service node does not meet the latency requirement of the terminal service, the MEAO may delete the deployed service platform, reselect a service node to deploy the service platform, and after redeploying the service platform, determine whether the latency data of the transmission path between the terminal and the service node meets the latency requirement of the terminal service again. If the latency data of the transmission path between the terminal and the service node does not meet the latency requirement of the terminal service, the MEAO reselects a service node to deploy the service platform, ..., until the latency data of the transmission path between the terminal and the service node meets the latency requirement of the terminal service.

Latency data from the terminal to the service platform is obtained by segment, when the latency data from the terminal to the service platform does not meet the service requirement of the terminal, only the service platform needs to be redeployed, and another device between the terminal and the service platform does not need to be redeployed. Therefore, the service platform can be efficiently deployed.

According to a fifth aspect, a latency obtaining apparatus is provided. The apparatus has a function module of implementing the method in any one of the first aspect and the possible implementations of the first aspect. The function module may be implemented by hardware, or may be implemented by hardware by executing corresponding software. The hardware or the software includes one or more modules corresponding to the foregoing function.

In a possible implementation, the apparatus may be a chip or an integrated circuit.

In a possible implementation, the apparatus includes a transceiver and a processor, and the apparatus may perform the method in any one of the first aspect and the possible implementations of the first aspect by using the processor.

The transceiver may be an interface circuit.

In a possible implementation, the apparatus may further include a memory. The memory is configured to store a computer program.

According to a sixth aspect, a latency optimization apparatus is provided. The apparatus has a function module of implementing the method in any one of the foregoing aspects and the possible implementations of the aspects. The function module may be implemented by hardware, or may be implemented by hardware by executing corresponding software. The hardware or the software includes one or more modules corresponding to the foregoing function.

In a possible implementation, the apparatus may be a chip or an integrated circuit.

In a possible implementation, the apparatus includes a transceiver and a processor, and the apparatus may perform the method in any one of the first aspect to the fourth aspect and the possible implementations of the aspects by using the processor.

The transceiver may be an interface circuit.

In a possible implementation, the apparatus may further include a memory. The memory is configured to store a computer program.

According to a seventh aspect, a computer-readable storage medium is provided. The computer storage medium stores computer-readable instructions; and when the computer-readable instructions are run, an apparatus is enabled to perform the method in any one of the foregoing aspects and the possible implementations of the aspects.

According to an eighth aspect, a computer program product is provided. When the computer program product is run, an apparatus is enabled to perform the method in any one of the foregoing aspects and the possible implementations of the aspects.

According to a ninth aspect, a chip is provided. The chip is coupled to a memory, and the chip is configured to: read and execute a software program stored in the memory, to implement the method in any one of the foregoing aspects and the possible implementations of the aspects.

### BRIEF DESCRIPTION OF DRAWINGS

FIG. 1A is a schematic diagram of a data transmission process according to a current technology;
FIG. 1B is an architectural diagram of a communication system according to an embodiment of this application;
FIG. 1C is a schematic structural diagram of a base station according to an embodiment of this application;
FIG. 1D is a schematic diagram of a data transmission process according to an embodiment of this application;
FIG. 1E is a diagram of transmission subpaths according to an embodiment of this application;
FIG. 2 is a schematic diagram of a latency obtaining process according to an embodiment of this application;
FIG. 3A is a schematic diagram of a latency obtaining process according to an embodiment of this application;
FIG. 3B is a schematic diagram of a latency obtaining process according to an embodiment of this application;
FIG. 3C is a schematic diagram of a latency obtaining process according to an embodiment of this application;
FIG. 4 is a schematic diagram of a latency optimization process in a PDU session establishment process according to an embodiment of this application;
FIG. 5 is a schematic diagram of a latency optimization process in a PDU session establishment process according to an embodiment of this application;
FIG. 6 is a schematic diagram of a latency optimization process in a handover process according to an embodiment of this application;
FIG. 7 is a schematic diagram of a latency optimization process in a handover process according to an embodiment of this application;
FIG. 8 is a schematic diagram of a latency optimization process in a device deployment process according to an embodiment of this application;
FIG. 9 shows a communication apparatus according to an embodiment of this application; and
FIG. 10 shows a communication apparatus according to an embodiment of this application.

### DESCRIPTION OF EMBODIMENTS

The following describes in detail embodiments of this application with reference to the accompanying drawings.

Embodiments of this application provide a latency obtaining method and apparatus, and a latency optimization method and apparatus, to resolve a problem in a current technology that a latency in a data transmission process cannot be optimized because a test cannot be performed by segment. The method, the apparatus and a system are based on a same inventive concept. The method, the apparatus, and the system have similar principles for resolving problems. Therefore, for implementation of the apparatus, the system, and the method, refer to each other, and details of repeated parts are not described.

Technical solutions in the embodiments of this application may be used in various communication systems, for example, a future 5th generation (5th Generation, 5G) system, a new radio access technology (new radio access technology, NR), and a future communication system such as a 6G system.

The service scenarios described in the embodiments of this application are intended to describe the technical solutions in the embodiments of this application more clearly, but constitute no limitation on the technical solutions provided in the embodiments of this application. Persons of ordinary skill in the art may learn that the technical solutions provided in the embodiments of this application are also applicable to a similar technical problem as a new service scenario emerges.

In addition, the term "for example" in embodiments of this application is used to represent giving an example, an illustration, or a description. Any embodiment or implementation solution described as an "example" in this application should not be explained as being more preferred or having more advantages than another embodiment or implementation solution. Exactly, the term "example" is used to present a concept in a specific manner.

For ease of understanding the embodiments of this application, the following describes some terms in the embodiments of this application, to facilitate understanding by persons skilled in the art.
(1) A terminal is also referred to as user equipment (user equipment, UE), a mobile station (mobile station, MS), a mobile terminal (mobile terminal, MT), or the like, and is a device that provides voice and/or data connectivity for a user. For example, the terminal device includes a handheld device, a vehicle-mounted device, or the like that has a wireless connection function. Currently, the terminal device may be a mobile phone (mobile phone), a tablet, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.
(2) A CU-CP is a radio access network (radio access network, RAN) centralized unit control plane network element, and carries a logical node of radio resource control (radio resource control, RRC) and a control plane part of a packet data convergence protocol (packet data convergence protocol, PDCP) of a gNB-CU.
(3) A CU-UP is a RAN centralized unit user plane network element, and carries a user plane part of the PDCP protocol and a service data adaptation protocol (Service Data Adaptation Protocol, SDAP) protocol that are used for the gNB-CU.
(4) A DU is a RAN distributed unit, and carries logical nodes of radio link control (radio link control, RLC), media access control (Media Access Control, MAC), and a physical layer (Physical Layer, PHY) of a gNB. Operations of the DU are partially controlled by the gNB-CU.
(5) A user plane function (user port function, UPF) is usually a gateway that connects a RAN to an internet.
(6) A policy control function (Policy Control Function, PCF) (in Chinese and English) is a core network control plane network element, and provides a policy control function.
(7) An MEC application orchestrator (MEAO) is an MEC application orchestrator in a network function virtualization environment, and mainly completes functions such as managing resources and deploying instances on an MEC platform and an MEC application.
(8) An access and mobility management function (access and mobility management function, AMF) network element is a core network control plane function, and provides functions of mobility management and access management of a user.
(9) A virtualization infrastructure (Virtualization Infrastructure) provides three types of virtualization resources: computing, storage, and a network in a network function virtualization environment, and carries deployment of the MEC APP.
(10) A multi-access edge computing platform (MEC Platform) is deployed on an MEC node, and provides necessary functions for the MEC APP running on the virtualization infrastructure.
(11) A multi-access edge computing platform manager (MEC Platform Manager) is a node-level management function in MEC, and provides life cycle management for the APP and the MEC platform.
(12) A session management function (SMF) network element is a core network control plane network element, and is mainly responsible for assigning an address, a tunnel identifier, and a charging identifier to the UE, interacting with the PCF to obtain a policy, and transferring the policy to the UPF.

The term "and/or" in this application describes an association relationship for describing associated objects and represents that three relationships may exist. For example, A and/or B may represent the following three cases: Only A exists, both A and B exist, and only B exists. The character "/" usually indicates an "or" relationship between the associated objects.

"A plurality of" in this application means two or more.

In the descriptions of this application, terms such as "first" and "second" are merely used for distinction and description, and should not be understood as an indication or implication of relative importance, or as an indication or implication of an order.

For ease of understanding the embodiments of this application, the following describes application scenarios of this application. When a terminal accesses a service, the terminal needs to send data to a service node. The data may be a request data packet. A data transmission process from the terminal to the service node includes: The terminal sends the data to a base station, the base station sends the data to a UPF of a core network, and the UPF of the core network sends the data to the service node. In a data sending process, latency data of (1), (2), and (3) shown in FIG. 1A may at least be generated. In a current technology, there is only a method for testing a total latency between the terminal and the UPF, and the test cannot be performed by segment.

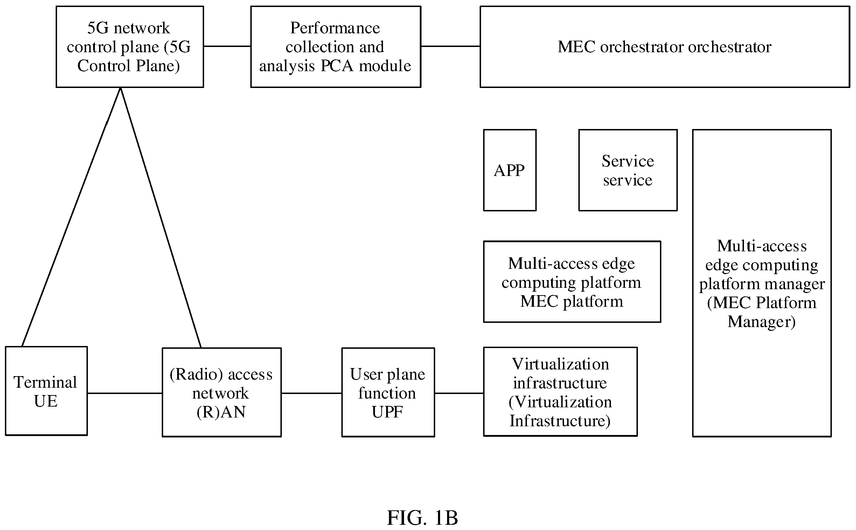

For ease of understanding the embodiments of this application, the following describes an architectural diagram of a system of this application. For details, refer to a schematic diagram of a system architecture shown in FIG. 1B. Data sent by the UE passes through the RAN, then passes through the UPF, and reaches the virtualization infrastructure in the MEC platform. Service access is performed by using the virtualization infrastructure. A performance collection and analysis (Performance Collection and Analysis, PCA) module is a newly added latency data collection and analysis module that connects a control plane (for example, a 5G network control plane (5G Control Plane)) and a management plane (for example, the MEC Orchestrator) in this application. The PCA module may obtain latency data via a control plane or directly deliver a request to a user plane network element (for example, the RAN or the UPF), and the user plane network element reports the latency data after testing. Alternatively, the PCA module may directly request and obtain the latency data from the user plane network element by using a client-server mode. Then, on one hand, the PCA module uses the latency data for user plane network element selection in a 5G procedure. On the other hand, the PCA module provides a UPF deployment location for the MEC application orchestrator. In this way, E2E latency optimization can be implemented. The PCA module can be independently deployed as a converged network element on the control plane and the management plane, or can be used as an enhancement of a network data analytics function NWDAF (Network Data Analytics Function) in the current 5G architecture. In this application, a device on which the PCA module is deployed is referred to as a first device.

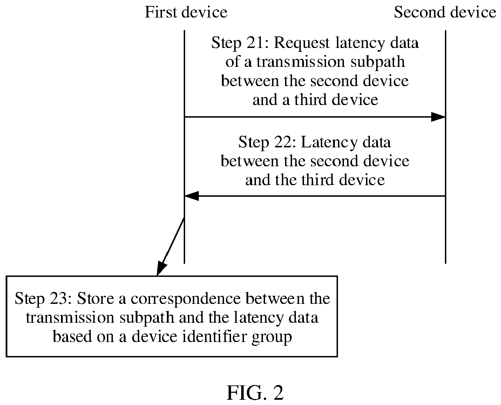

As shown in FIG. 2, this application provides a schematic diagram of a latency obtaining process.

Step 21: A first device sends a request message to a second device, where the request message is used to obtain latency data of a transmission subpath between the second device and a third device, and a transmission path can be directly established between the third device and the second device.

The transmission path herein is a path for transmission of user data, and both the second device and the third device are user plane devices.

Step 22: The first device receives a response message sent by the second device, where the response message includes the latency data of the transmission subpath between the second device and the third device.

After the second device receives the request message sent by the first device, the second device may test latency data of a transmission subpath between the second device and each third device. The latency data may be obtained online by the second device. An obtaining method is: One device sends a data packet of a typical quantity of bytes to another device, and receives an acknowledgment data packet returned by the another device, where the latency data may be a value of duration that lasts from sending the data packet to receiving the acknowledgment data packet, or may be an average value of values of duration that lasts from sending data packets to receiving the data packets. The second device may alternatively test latency data of a transmission subpath between the second device and each third device in advance. The second device sends a response message to the first device, where the response message includes the latency data of the transmission subpath between the second device and each third device. In the response message, a transmission path between the second device and the third device may be represented based on a device identifier group including an identifier of the second device and an identifier of the third device.

Step 23: The first device stores a correspondence between the transmission subpath and the latency data, where the transmission subpath is represented based on the device identifier group including the identifier of the second device and the identifier of the third device.

After receiving the latency data, of the transmission subpath, sent by the second device, the first device may store the correspondence between the transmission subpath and the latency data. If the transmission subpath is represented based on the device identifier group including the identifier of the second device and the identifier of the third device, the storing the correspondence between the transmission subpath and the latency data means storing a correspondence between the latency data, and the identifier of the second device and the identifier of the third device. One correspondence includes only an identifier of one second device and an identifier of one third device.

Because the transmission path can be directly established between the second device and the third device, that is, in a data transmission process, the second device and the third device are two logically adjacent devices, when a terminal accesses a service from a service node, a data packet needs to be transmitted by a plurality of devices, and a plurality of latency segments exist. In this application, latency data between devices that can directly establish transmission paths to each other is separately obtained, so that the latency data can be obtained by segment.

Optionally, the request message used to obtain the latency data and/or the response message used to report the latency data may be messages/a message defined in an existing 3GPP protocol, or a new message format may be defined to complete a request and reporting of the latency data.

The request message used to obtain the latency data may include a PTL (performance type list, performance type list) information element, used to indicate that to-be-obtained latency data is latency data between which two devices. A definition of the PTL information element may be shown in the following table 1.

The response message used to report the latency data may include an LDL (latency data list, latency data list), used to carry the latency data. A definition of the LDL information element may be shown in the following table 2.

**Table 1**

| Name of an information element | Value range | Description |
|---|---|---|
| Performance type list LDL | Performance type list | List of latency types that need to be tested or reported |
| Performance type performance type | L_UE_DU | Latency of a transmission subpath between UE and a DU |
| | L_CU_DU | Latency of a transmission subpath between a CU-UP and the DU |
| | L_CU_UPF | Latency of a transmission subpath between the CU-UP and a first UPF |
| | L_UPF_UPF | Latency of a transmission subpath between the first UPF and a second UPF |

As shown in the table 1, when the first device sends, to the second device, the request message used to obtain the latency data, the request message may carry the PTL information element. The table 1 merely shows specific content that may be included in the PTL information element. In actual application, the PTL information element in the request message may include one or more of performance types performance type in the table 1.

**Table 2**

| Name of an information element | Value range | Description |
|---|---|---|
| Latency data list LDL | List of latency data items | List of reported latency data |
| >Latency data item (1, ..., n) | | Latency data entry (1, ..., n) |
| >>Performance type | | Performance type |
| >>Source ID | | Source (Second device) ID |
| >>Destination ID | | Destination (Third device) ID |
| >>Latency | [0,∞) | Latency data |

When the second device sends the response message to the first device, the response message may include the LDL information element in the table 2. The table 2 merely shows specific content that may be included in the LDL information element. The latency value has a one-to-one correspondence with the second device ID and the third device ID. In other words, the LDL carries the correspondence between the transmission subpath and the latency data, and the transmission subpath is represented based on the device identifier group including the identifier of the second device and the identifier of the third device. The latency data entry may be understood as one piece of latency data, that is, latency data between a first second device and one third device is one piece of latency data. The LDL may further carry a performance type performance type. The performance type performance type is used to indicate a type of latency data, that is, indicate that the latency data is latency data between which two devices. The latency data is specifically latency data of a transmission path between a device corresponding to the source ID and a device corresponding to the target ID. In actual application, the LDL information element in the request message may include one latency data entry, that is, include one piece of latency data, or may include a plurality of latency data entries, that is, include a plurality of pieces of latency data.

The first device receives latency data of the transmission path between the second device and the third device from the second device.

For example, if the second device is an access network device, the third device is a core network device; if the second device is an access network device, the third device is a terminal device; or if the second device is a core network device, the third device is also a core network device. The access network device may be, for example, a base station, and the core network device may be, for example, a user plane UPF network element. The access network device may be a base station, and the core network device may be a UPF. The core network device includes the first UPF and the second UPF. The first UPF is a device that directly establishes a transmission path to the access network device, and the second UPF is a device that does not directly establish a transmission path to the access network device. The first UPF usually refers to an intermediate UPF (intermediate UPF, I-UPF), and the second UPF usually refers to an anchor (anchor) UPF.

For example, the second device may be the base station, and the third device may be the terminal; or
the second device is the first UPF, and the third device is the second UPF.

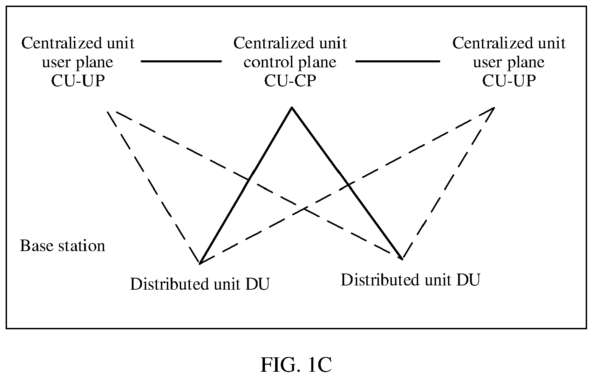

In this application, a test performed by segment and a latency optimization method may be used in an architecture in which a centralized unit CU and a distributed unit DU are separately deployed, and a control plane CP and a user plane UP are separately deployed. In this architecture, an internal structure of a base station is shown in FIG. 1C. One base station includes one CU-CP, several CU-UPs, and several DUs. The CU-CP may be connected to each CU-UP included in the base station, for example, may be connected through an E1 interface. The CU-CP may be connected to each DU included in the base station, for example, may be connected through an F1-C interface. One CU-UP is connected to several DUs, for example, may be connected through F1-U interfaces. One CU-UP is connected to only one CU-CP, and one DU is also connected to only one CU-CP.

Based on the architecture shown in FIG. 1C, the second device may be the CU-UP, and the third device is the DU;
the second device may be the CU-UP, and the third device is the first UPF; or
the second device may be the DU, and the third device is the terminal.

In this application, when the DU or the base station tests latency data between the DU or the base station and terminals, because there are a large quantity of terminals, the terminals are in a moving state, and area handover is frequently performed, if latency data between each terminal and the DU or the base station is tested, it is clearly unreasonable. Therefore, if the third device is a terminal, identifiers of all third devices in the correspondence that is between the transmission subpath and the latency data and that is stored by the first device may be the same. In other words, that the third device is which terminal is not identified, and an identifier of a terminal in the correspondence is merely used to indicate that the third device is a terminal.

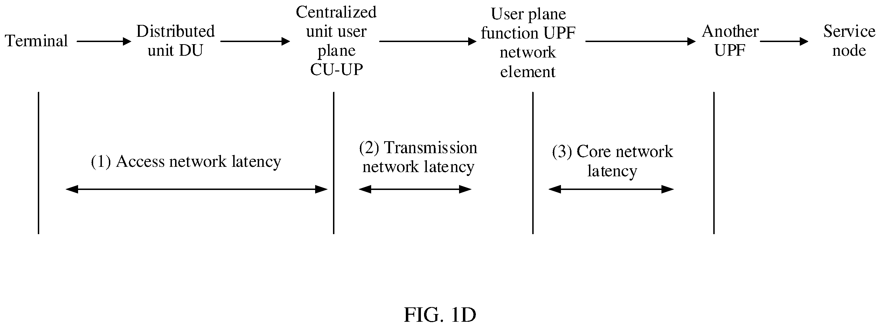

Based on the schematic structural diagram of the base station shown in FIG. 1C, FIG. 1D is a schematic diagram of a data transmission process. A terminal first transmits data to a DU in the base station, the DU transmits the data to a CU-UP, the CU-UP transmits the data to a UPF, the UPF then transmits data to another UPF, and the another UPF transmits the data to a service node. In this case, an (1) access network latency in FIG. 1A includes a latency between the terminal and the DU and a latency between the DU and the CU-UP. A (2) transmission network latency in FIG. 1A includes a latency between the CU-UP and the UPF. A (3) data processing latency inside a core network in FIG. 1A includes a latency between the UPFs. According to a definition in a related 3GPP protocol, a new UPF may be inserted between a RAN and a PDU session anchor UPF. The UPF may be an uplink classifier of a data flow, and a function of the UPF is to offload data to a local data network or a remote PDU session anchor UPF based on identification performed on an uplink feature of a service flow. The UPF may alternatively be a branch point (Branch Point), which is inserted as an offload point for IPv6. Therefore, there is also a latency in data transmission between the two UPFs.

In the data transmission process, different DUs, CU-UPs, and UPFs are selected to establish transmission paths, and different latencies are caused in the data transmission process. In this application, latency data of a transmission subpath between the terminal and the DU, latency data of a transmission subpath between the DU and the CU-UP, latency data of a transmission subpath between the UP and a first UPF, and latency data of a transmission subpath between the first UPF and a second UPF may be separately obtained, and a DU, a CU-UP, a UPF, or the like that can enable a data transmission latency to meet a service requirement of the terminal may be selected based on the obtained latency data of the plurality of transmission subpaths, to implement latency optimization.

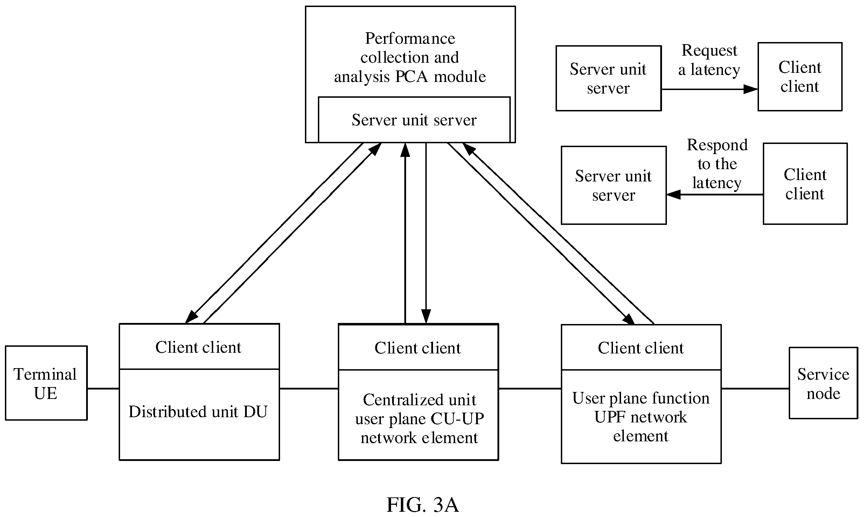

As shown in FIG. 3A, this application provides a schematic diagram of a latency obtaining process. A server (server) unit is disposed in a PCA module, and is configured to obtain latency data. A client (client) is separately disposed in a DU, a CU-UP, and a UPF, and is used in an interaction process, for obtaining the latency data, with the server in the PCA module. Each second device may test latency data between the second device and a third device that directly establishes a communication path to the second device. In this case, the DU may test latency data of a transmission subpath between the DU and a terminal and latency data of a transmission subpath between the DU and the CU-UP, the CU-UP may test latency data of a transmission subpath between the CU-UP and the DU and latency data of a transmission subpath between the CU-UP and the UPF, and the UPF may test latency data of a transmission subpath between the UPF and the CU-UP and latency data of a transmission subpath between the UPF and a second UPF. The server unit in the PCA module delivers, to the client client separately disposed in the DU, the CU-UP, and the UPF, a request message used to obtain latency data. The client client separately disposed in the DU, the CU-UP, and the UPF may send a response message to the server unit in the PCA module to report respectively tested latency data.

In this application, if the second device is a user plane device, such as the DU, the CU-UP, or the UPF, when sending the request message to the second device, the first device may forward the request message to the second device by using a control plane device (such as the CU-CP or the SMF). Alternatively, the first device may receive, by using the control plane device, the response message sent by the second device.

A control plane device corresponding to the CU-UP or the DU is the control plane CU-CP network element. If the second device is the CU-UP or the DU, when the first device sends the request message to the second device, the first device may send the request message to the CU-CP, and the CU-CP sends the request message to the second device; when the first device receives the response message sent by the second device, the first device may receive the response message sent by the CU-CP, and the response message is sent by the second device to the CU-CP. When sending the request message to the second device, the CU-CP may directly forward the request message, or may encapsulate the request message into another existing message and send the another existing message to the second device. When sending the response message to the first device, the CU-CP may directly forward the response message, or may encapsulate the response message into another existing message and send the another existing message to the first device.

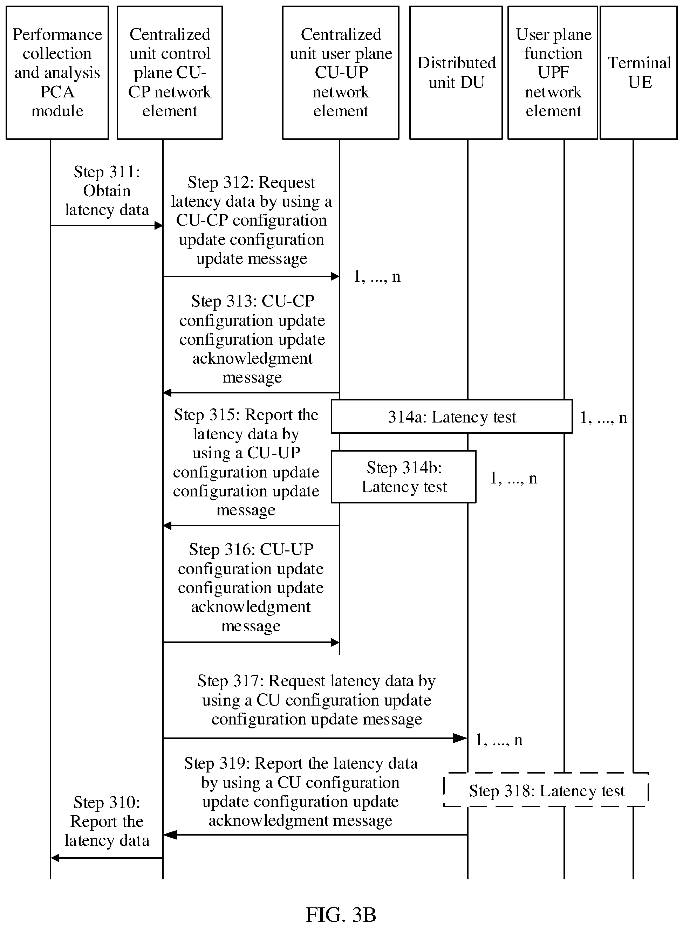

As shown in FIG. 3B, this application provides a schematic diagram of a latency obtaining process on an access network side.

Step 311: A PCA module sends, to a CU-CP, a request message used to obtain latency data.

Step 312: After receiving the request message from the PCA module, the CU-CP sends a CU-CP configuration update configuration update message to each CU-UP managed by the CU-CP, so as to notify the CU-UP to initiate a latency test.

The CU-CP configuration update message may include indication information used to indicate to test latency data, and the CU-CP configuration update message may further include indication information indicating that types of to-be-obtained latency data are latency data between a DU and the CU-UP and latency data between the CU-CP and a first UPF. For example, an information element carried in the message includes a PTL, where latency types in a performance type are L_CU_DU and L_CU_UPF.

Step 313: After receiving the message sent by the CU-CP, the CU-UP may send an acknowledgment message CU-CP configuration update ack to the CU-CP, to indicate that a test request has been received.

Step 314a: The CU-UP initiates latency tests to all UPFs (1, ..., n) that can directly establish transmission paths to the CU-UP, for example, may initiate the latency tests through an N3 interface.

Step 314b: The CU-UP initiates latency tests to all DUs (1, ..., n) that can directly establish transmission paths to the CU-UP, for example, may initiate the latency tests through an F1-U interface.

Step 315: After the latency tests end, the CU-UP sends a CU-UP configuration update message to the CU-CP to report latency data.

Specifically, latency data of a transmission subpath between the DU and the CU-UP and latency data of a transmission subpath between the CU-UP and the first UPF are reported. For example, the CU-UP configuration update message may include an information element LDL, where a performance type includes latency types L-CU_DU and L_CU_UPF.

Step 316: After receiving the CU-UP configuration update message sent by the CU-UP, the CU-CP sends the acknowledgment message CU-UP configuration update ack to the CU-UP, to indicate that the latency data has been received.

In an optional solution, the CU-CP may report the latency data in step 313. In this case, the CU-CP configuration update ack message may include the information element LDL, where the performance type includes the latency types L-CU_DU and L_CU_UPF.

Step 317: After receiving the request message from the PCA module, the CU-CP sends a CU configuration update message to each DU managed by the CU-CP, so as to notify the DU to initiate a latency test.

The CU configuration update message may include indication information used to indicate to test latency data, and the CU configuration update message may further include indication information indicating that a type of to-be-obtained latency data is latency data between the DU and a terminal. For example, an information element carried in the message includes the PTL, where a latency type in the performance type is L_UE_DU.

Step 318: After receiving the message from the CU-CP, the DU initiates a latency test between the DU and the UE.

In an optional solution, the DU has pretested the latency data between the DU and the terminal.

Step 319: The DU sends a CU configuration update ack message to the CU-CP to report the latency data.

Specifically, latency data of a transmission subpath between the DU and the terminal is reported. For example, the CU configuration update ack message may include the information element LDL, where the performance type includes a latency type L_UE_DU. A UE ID is null or is a default value.

Step 310: The CU-CP sends a response message to the PCA module, summarizes and deduplicates the latency data reported in step 315 and step 319, and reports the latency data to the PCA module.

In an optional solution, the latency data in step 315 and the latency data in step 319 may be reported by using different response messages.

At this point, the latency data obtaining procedure on the access network side is complete.

A control plane device corresponding to a UPF is an SMF. If a first device is the first UPF, when the first device sends the request message to a second device, the first device may send the request message to the SMF, and the SMF sends the request message to the second device; when the first device receives the response message sent by the second device, the first device may receive the response message sent by the SMF, and the response message is sent by the second device to the SMF. When sending the request message to the second device, the SMF may directly forward the request message, or may encapsulate the request message into another existing message and send the another existing message to the second device. When sending the response message to the first device, the SMF may directly forward the response message, or may encapsulate the response message into another existing message and send the another existing message to the first device.

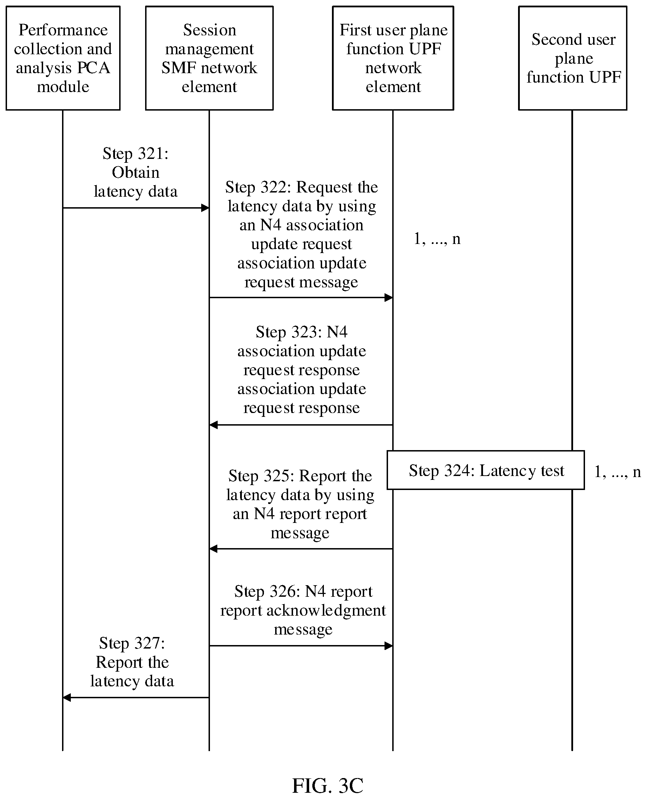

As shown in FIG. 3C, this application provides a schematic diagram of a latency obtaining process on a core network side.

Step 321: A PCA module sends, to an SMF, a request message used to obtain latency data.

Step 322: After receiving the request message from the PCA module, the SMF sends an N4 association update request association update request message to each first UPF managed by the SMF, to notify the UPF to initiate a latency test.

The N4 association update request message may include indication information used to indicate to test the latency data, and the N4 association update request message may further include indication information indicating that a type of to-be-obtained latency data is latency data between the first UPF and a second UPF. For example, an information element carried in the message includes a PTL, where a latency type in a performance type is L_UPF_UPF.

Step 323: After receiving the message sent by the SMF, the first UPF may send a response message N4 association update request response to the PCA module, to indicate that a test request has been received.

Step 324: The first UPF initiates latency tests to all second UPFs (1, ..., n) that can directly establish transmission paths to the first UPF, for example, may initiate the latency tests through an N9 interface.

Step 325: After latency tests end, the first UPF sends an N4 report report message to the SMF to report latency data.

Specifically, latency data of a transmission subpath between the first UPF and the second UPF is reported. For example, the CU-UP configuration update message may include an information element LDL, where a performance type includes the latency type L_UPF_UPF.

Step 326: After receiving the N4 report message sent by the UPF, the SMF sends an N4 report ack to the UPF, to indicate that the latency data has been received.

Step 327: The SMF sends a response message to the PCA module, to report latency data between the UPFs.

At this point, the latency data obtaining procedure on the core network side is complete.

In the foregoing process, the latency data of the transmission subpath between the terminal and the DU, the latency data of the transmission subpath between the DU and the CU-UP, the latency data of the transmission subpath between the UP and the first UPF, and the latency data of the transmission subpath between the first UPF and the second UPF may be obtained, and then a DU, a CU-UP, a UPF, or the like that can enable a data transmission latency to meet a service requirement of the terminal may be selected based on the obtained latency data of the plurality of transmission subpaths, to implement latency optimization.

An embodiment of this application provides a latency optimization process.

Step 41: A fourth device sends a request message to a first device, and correspondingly, the first device receives the request message sent by the fourth device, where the request message is used to obtain a first transmission path that meets a latency requirement of a terminal service. The first transmission path may be a transmission path between a terminal and a core network device, and the request message includes an identifier of each device managed by the fourth device.

Step 42: The first device determines, based on the identifier that is of each device and that is included in the request message and a stored correspondence between a plurality of transmission subpaths and latency data, a plurality of transmission subpaths corresponding to latency data that can meet the latency requirement, where the determined plurality of transmission subpaths form a target first transmission path.

There may be one or more first transmission paths that meet the latency requirement. The fourth device usually requests one first transmission path, or according to a communication requirement, the terminal can access a service by using only one transmission path. In this case, the first device determines a final target first transmission path from a plurality of first transmission paths that meet the latency requirement. Usually, it may be considered that there is only one determined target first transmission path.

Step 43: The first device may send a response message to the fourth device.

In an optional solution, device identifier groups that respectively and correspondingly represent the plurality of transmission subpaths that form the target first transmission path each include an identifier of a fifth device managed by the fourth device, and the response message includes the identifier of the fifth device and an identifier that is of another device and that forms the device identifier group with the identifier of the fifth device. The identifier of the fifth device is an identifier that is of a device and that is included in the request message, and the fifth device is a device on the target first transmission path. The first device may send a response message to the fourth device, and correspondingly, the fourth device receives the response message sent by the first device. The fourth device controls, based on the response message, the fifth device to establish a transmission path to the another device, where the established transmission path is used for transmission of the terminal service. The fourth device may be an SMF, and a plurality of devices managed by the fourth device are a plurality of first UPFs; or the fourth device may be a CU-CP, and a plurality of devices managed by the fourth device are a plurality of CU-UPs.

For example, the fourth device is the SMF, and the target first transmission path is from the terminal to a DU to the CU-UP to the first UPF. The first device (a PCA module) not only needs to notify the SMF of an identifier of the first UPF (fifth device), but also needs to notify the SMF of an identifier that is of the CU-UP (another device) and that forms an identifier group together with the identifier of the first UPF. In this way, the SMF may notify the first UPF of the identifier of the CU-UP, that is, the SMF controls the first UPF to establish a transmission path to the CU-UP that can directly establish a transmission path to the first UPF.

The first device selects a plurality of device identifiers corresponding to a transmission path that meets the latency requirement of the terminal service, and a transmission path established by a plurality of devices meets the latency requirement of the terminal service, so that a latency of service data transmission can be optimized.

In an optional solution, the response message includes device identifier groups that respectively and correspondingly represent the plurality of transmission subpaths that form the target first transmission path. The fourth device respectively sends the device identifier groups in the response message to different management devices that each can control a device corresponding to each device identifier in the device identifier group to establish a transmission path, and the different management devices each control the device corresponding to each device identifier to establish the transmission path, where the established transmission path is used for transmission of the terminal service. If the fourth device is an SMF, a plurality of devices that are managed by the fourth device and that are included in the request message are a plurality of first UPFs.

For example, the fourth device is the SMF, and the target first transmission path is from the terminal to a DU to a CU-UP to a first UPF. The first device (a PCA module) not only needs to notify the SMF of an identifier of the first UPF (fifth device), but also needs to notify a CU-CP (management device) that can control the DU corresponding to an identifier DU of the DU to establish a transmission path to the CU-UP corresponding to an identifier of the CU-UP, of the identifier of the DU and the identifier of the CU-UP that form an identifier group, and the identifier of the CU-UP and the identifier of the first UPF that form an identifier group in the target first transmission path. The CU-CP may also control the CU-UP to establish a transmission path to the first UPF, the CU-UP controls the DU to establish a transmission path to the CU-UP, and controls the CU-UP to establish a transmission path to the first UPF.

A plurality of device identifiers corresponding to a transmission path that meets the latency requirement of the terminal service are selected, and a transmission path established by a plurality of devices meets the latency requirement of the terminal service, so that a latency of service data transmission can be optimized.

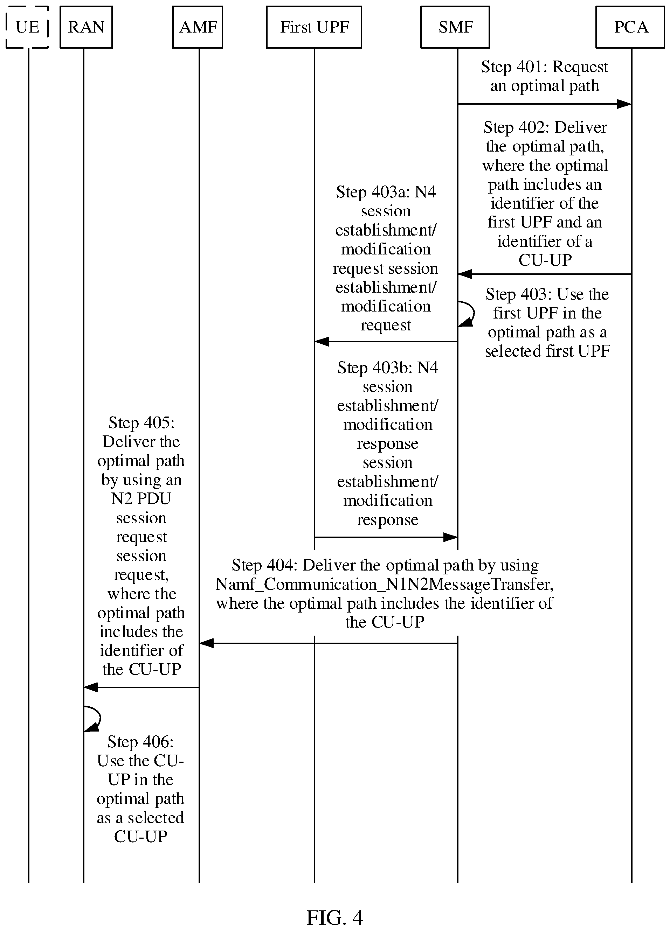

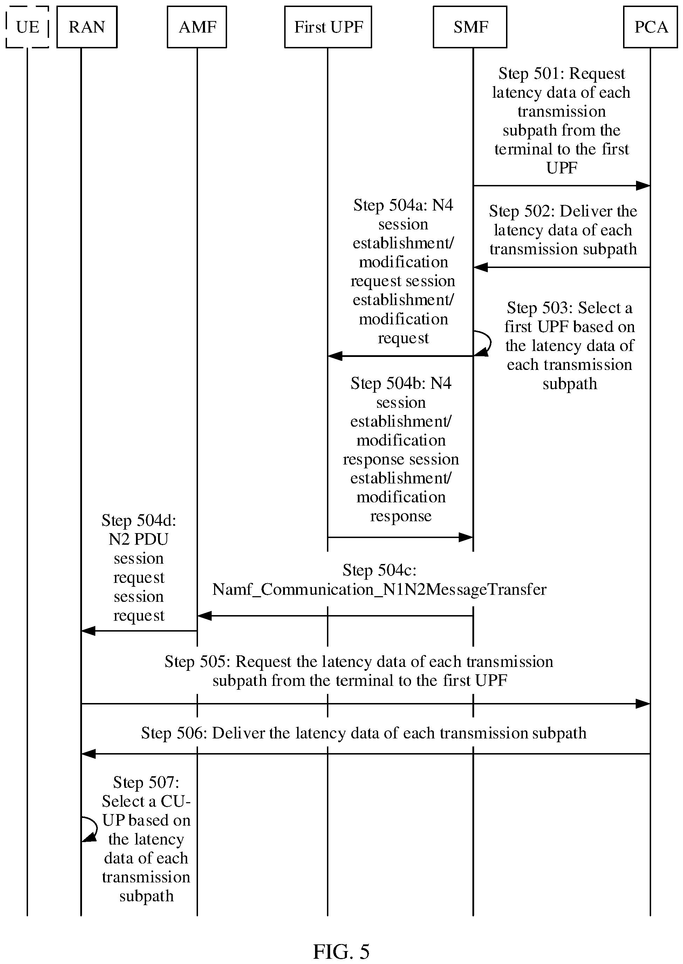

In an existing 3GPP standard, in a process in which the UE establishes a PDU session, the SMF needs to perform UPF selection, and the CU-CP needs to perform CU-UP selection. FIG. 4 and FIG. 5 in this application provide a manner of selecting a UPF and a CU-UP by using the latency data, of the transmission subpaths, obtained in the foregoing embodiment as one of parameters. Another process of establishing the PDU session is the same as that of the existing standard.

FIG. 4 is a schematic diagram of a latency optimization process in a PDU session establishment process.

Step 401: An SMF sends a request message to a PCA module, where the request message is used to request an optimal first transmission path that meets a latency requirement of a terminal service, and the first transmission path is between a terminal and a core network device. The core network device herein may be understood as a first UPF.

The request message may further include an identifier of each first UPF managed by the SMF.

A transmission path that meets the latency requirement of the terminal service may be a transmission path, among transmission paths from the terminal to the first UPF, whose latency is less than a preset latency, or may be a transmission path, among transmission paths from the terminal to the first UPF, whose latency is the smallest.

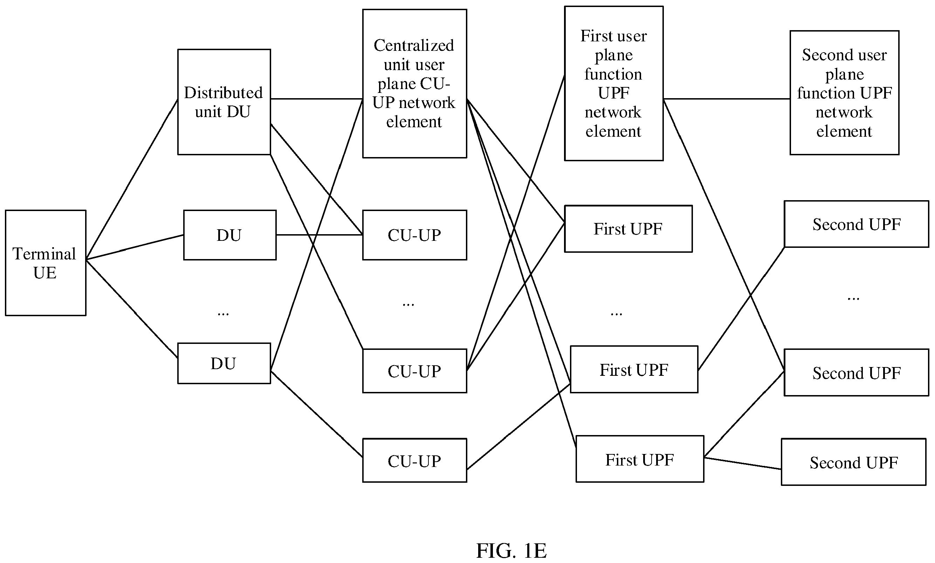

Correspondingly, after receiving the request message from the SMF, the PCA module may select a plurality of transmission paths between the terminal and a plurality of first UPFs based on obtained latency data corresponding to a transmission subpath between the terminal and a DU, obtained latency data corresponding to a transmission subpath between the DU and a UP, obtained latency data corresponding to a transmission subpath between the UP and the first UPF, and identifiers of the plurality of first UPFs in the request message. FIG. 1E is a schematic diagram of transmission subpaths. The terminal may establish a transmission subpath to one or more DUs, each DU may establish a transmission subpath to one or more CU-UPs, each CU-UP may establish a transmission subpath to one or more first UPFs, and each first UPF may establish a transmission subpath to one or more second UPFs. It can be learned that there may be a plurality of transmission paths between the terminal and any first UPF.

The PCA module determines a plurality of transmission paths between the terminal and the plurality of first UPFs in the request message, and determines, from the plurality of transmission paths, a target first transmission path (an optimal path) that meets a latency requirement. The determined target first transmission path may be from the terminal to the DU to the CU-UP to the first UPF, and the target first transmission path includes three transmission subpaths: a subpath from the terminal to the DU, a subpath from the DU to the CU-UP, and a subpath from the CU-UP to the first UPF. The first UPF in the target first transmission path is a first UPF managed by the SMF that sends the request message.

Step 402: The PCA module sends a response message to the SMF, where the response message is used to deliver an optimal transmission path that meets the latency requirement of the terminal service.

For example, the response message includes an identifier of a target first UPF corresponding to the target first transmission path and an identifier that is of a target CU-UP and that forms a device identifier group with the identifier of the determined target first UPF.

In an optional solution, before step 401, the SMF performs PCF selection. In subsequent step 401 and step 402, the SMF may send the request message to the PCA module by using a selected PCF, and receive, by using the selected PCF, the response message sent by the SMF.

Step 403: The SMF uses a first UPF corresponding to the identifier of the target first UPF in the response message as a UPF in a PDU session. This application provides a manner in which the SMF selects a UPF, that is, the target first UPF in the response message is used as the selected UPF in the PDU session.

Step 403a: The SMF sends an N4 session establishment/modification request to the selected UPF.

Step 403b: The UPF sends an N4 session establishment/modification response to the SMF.

Step 403a and step 403b are the same as those in a current technology.

In a PDU session establishment process, CU-UP selection also needs to be performed. In an optional solution, a RAN or a CU-CP requests, from the PCA module, an identifier of the CU-UP for establishing the PDU session. In another optional solution, the RAN or the CU-CP does not request the CU-UP, but forwards the identifier of the CU-UP to the RAN or the CU-CP by using another device (for example, the SMF).

FIG. 4 provides an implementation. The SMF sends an identifier of a target CU-UP in the response message to the RAN or the CU-CP. For a specific process, refer to the following steps.

Step 404: The SMF sends the optimal path to an AMF, for example, may send the optimal path by using a Namf_Communication_N1N2MessageTransfer message. The Namf_Communication_N1N2MessageTransfer message carries the optimal path, and the optimal path may be represented by using the identifier of the target CU-UP. In this case, the message includes the identifier of the target CU-UP, and may further include an identifier of a target UPF.

Step 405: The AMF sends the optimal path to the RAN, for example, may send the optimal path by using an N2 PDU session request message. The N2 PDU session request message carries the optimal path, and the optimal path may be represented by using the identifier of the target CU-UP. In this case, the message includes the identifier of the CU-UP, and may further include the identifier of the target UPF.

Step 406: The RAN uses the target CU-UP in the optimal path as the CU-UP in the PDU session, and controls the CU-UP to transmit the terminal service.

In a process of establishing the PDU session, an optimal transmission path from the terminal to the first UPF is selected based on latency data of a plurality of transmission subpaths, the SMF uses a UPF in the optimal transmission path as the selected UPF in the PDU session, and the RAN uses the CU-UP in the optimal transmission path as the selected CU-UP in the PDU session. Therefore, latency optimization is implemented in the PDU session.

An embodiment of this application provides a latency optimization process.

Step 51: A fourth device sends a request message to a first device, where the request message is used to obtain latency data of a first transmission subpath, the request message includes an identifier of each seventh device managed by the fourth device, and the first transmission subpath is a transmission subpath represented by a device identifier group in which the identifier of the seventh device is located.

Correspondingly, the first device receives the request message sent by the fourth device.

If the fourth device is an SMF, the seventh device may be a first UPF; or
if the fourth device is a CU-CP, the seventh device may be a CU-UP.

Step 52: The first device determines, based on a pre-stored transmission subpath, a device identifier group in which the identifier, of the seventh device, in the request message is located, and sends a response message to the fourth device, where the response message includes a device identifier group used to represent each first transmission subpath, and latency data corresponding to the first transmission subpath. The device identifier group that is used to represent each first transmission subpath and that is in the response message is the device identifier group in which the identifier of the seventh device is located.

If the fourth device is an SMF, the seventh device may be a first UPF, and a device identifier group in which an identifier of the first UPF is located may be a device identifier group including an identifier of the CU-UP and the identifier of the first UPF, or may be a device identifier group including the identifier of the first UPF and an identifier of a second UPF. The response message may further carry another transmission subpath and latency data corresponding to the another transmission subpath, for example, carry a device identifier group used to represent a transmission subpath between a terminal and a DU, and latency data corresponding to the transmission subpath, for example, carry a device identifier group that represents a transmission subpath between the CU-UP and the DU, and latency data corresponding to the transmission subpath.

If the fourth device is a CU-CP, the seventh device may be a CU-UP, and a device identifier group in which an identifier of the CU-UP is located may be a device identifier group including the identifier of the CU-UP and an identifier of a first UPF, or may be a device identifier group including the identifier of the CU-UP and an identifier of a DU. The response message may further carry another transmission subpath and latency data corresponding to the another transmission subpath, for example, carry a device identifier group used to represent a transmission subpath between a terminal and the DU, and latency data corresponding to the transmission subpath, for example, carry a device identifier group that represents a transmission subpath between a second UPF and the first UPF, and latency data corresponding to the transmission subpath.

Step 53: The fourth device selects a target device identifier group from at least one device identifier group in the response message based on a latency requirement of a terminal service, and controls a target seventh device in the target device identifier group to establish a transmission path to another device, where the established transmission path is used for transmission of the terminal service.

Because a transmission path is established between devices that meet the latency requirement of the terminal service, a latency in a data transmission process is optimized, and fast service transmission of the terminal can be ensured.

FIG. 5 is a schematic diagram of a latency optimization process in a process in which UE establishes a PDU session.

Step 501: An SMF sends a request message to a PCA module, and correspondingly, the PCA module receives the request message sent by the SMF, where the request is used to request latency data of each transmission subpath from a terminal to a first UPF, and the request message includes an identifier of a UPF managed by the SMF.

Step 502: The PCA module sends a response message to the SMF, and correspondingly, the SMF receives the response message sent by the PCA module, where the response message includes a transmission subpath between the terminal and a DU, a transmission subpath between the DU and a CU-UP, a transmission subpath between the CU-UP and the first UPF, a transmission subpath between the first UPF and a second UPF, and latency data corresponding to the transmission subpaths. In the response message, each transmission subpath may be represented based on a device identifier group. The transmission subpaths sent by the PCA module to the SMF may be filtered based on an identifier of a UPF sent by the SMF. Optionally, the response message further includes the transmission subpath between the first UPF and the second UPF and corresponding latency data.

Step 503: The SMF may determine a plurality of transmission paths from the terminal to the first UPF based on each transmission subpath in the response message, and use latency data corresponding to the transmission paths from the terminal to the first UPF as one of parameters for selecting the first UPF in the PDU session. For other parameters, refer to 23.501 6.3.3.3.

Optionally, a plurality of transmission paths from the terminal to the second UPF may be determined, and latency data corresponding to the transmission paths from the terminal to the second UPF is used as one of parameters for selecting the first UPF in the PDU session. For other parameters, refer to 23.501 6.3.3.3.

Optionally, the PCA module determines the latency data corresponding to the plurality of transmission paths from the terminal to the first UPF or the second UPF, and sends the latency data to the SMF. In this case, the SMF does not need to perform this process.

In a PDU session establishment process, after selecting a UPF, the SMF may perform the following steps.

Step 504a: The SMF sends an N4 session establishment/modification request to the selected UPF.

Step 504b: The UPF sends an N4 session establishment/modification response to the SMF.

Step 504c: The SMF sends an Namf_Communication_N1N2MessageTransfer message to an AMF.

Step 504d: The AMF sends an N2 PDU session request to a RAN.

Step 504a to step 504d are the same as those in a current technology.

In the PDU session establishment process, CU-UP selection also needs to be performed. In an optional solution, the RAN or the CU-CP requests, from the PCA module, an identifier of a CU-UP for establishing the PDU session. As a result of the above process, the first UPF has been determined. When performing CU-UP selection subsequently, the latency data between the first UPF and the second UPF may not be considered. The SMF may further notify the RAN of the identifier of the selected first UPF. In this way, when requesting latency data of a transmission subpath, the RAN does not need to request all transmission subpaths.

Step 505: The RAN sends a request message to the PCA module, and correspondingly, the PCA module receives the request message sent by the RAN, where the request is used to request the latency data of each transmission subpath from the terminal to the first UPF, and the request message includes an identifier of each CU-UP managed by the CU-CP and an identifier of the first UPF selected by the SMF.

Step 506: The PCA module sends a response message to the RAN, and correspondingly, the RAN receives the response message sent by the PCA module, where the response message includes the transmission subpath between the terminal and the DU, the transmission subpath between the DU and the CU-UP, the transmission subpath between the CU-UP and the first UPF, and the latency data corresponding to the transmission subpaths. In the response message, each transmission subpath may be represented based on a device identifier group. The transmission subpaths sent by the PCA module to the RAN may be filtered based on the identifier of the first UPF and the identifier of the CU-UP that are sent by the RAN.

Step 507: The RAN may determine, based on each transmission subpath in the response message, a transmission path, among transmission paths from the terminal to the first UPF, whose latency is the smallest, and use a CU-UP in the transmission path whose latency is the smallest as a selected CU-UP in the PDU session. The RAN transmits a terminal service with the selected CU-UP.

Optionally, the PCA module determines a transmission path, among transmission paths from the terminal to the first UPF, whose latency is the smallest based on the transmission subpath between the terminal and the DU, the transmission subpath between the DU and the CU-UP, the transmission subpath between the CU-UP and the first UPF, and the latency data corresponding to the transmission subpaths, and sends an identifier of a CU-UP in the transmission path whose latency is the smallest to the CU-CP in the RAN.

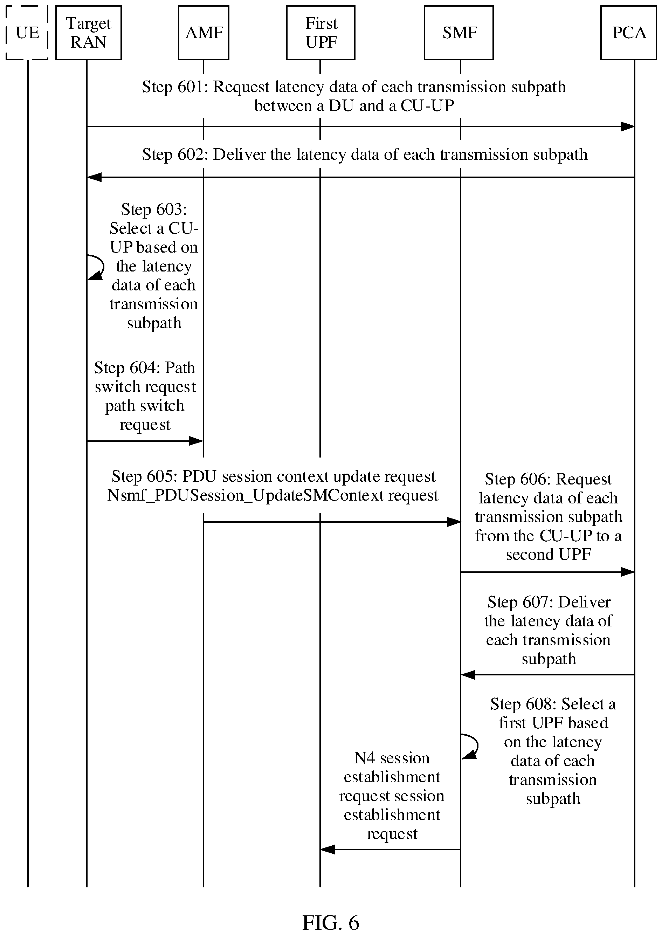

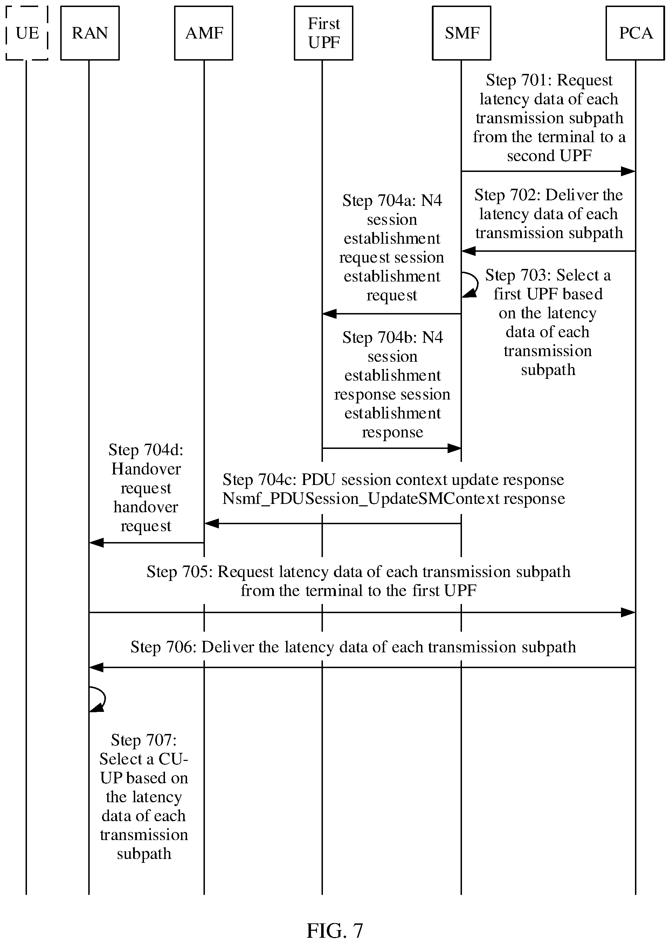

In an existing 3GPP standard, in a process in which the UE performs handover, the SMF needs to perform UPF selection, and the CU-CP needs to perform CU-UP selection. FIG. 6 and FIG. 7 in this application provide a manner of selecting a UPF and a CU-UP by using the latency data, of the transmission subpaths, obtained in the foregoing embodiment as one of parameters. Another process of handover is the same as that of the existing standard. The handover herein may be that a device that provides an access network service for the terminal needs to be handed over due to area handover in a moving process of the terminal. A specific scenario may be cell handover, base station handover, macro base station handover, or the like.

FIG. 6 is a schematic diagram of a latency optimization process in which UE is handed over based on an Xn interface.

Step 601: In a handover preparation process, a target RAN after handover may send a request message to a PCA module, and correspondingly, the PCA module receives the request message sent by the target RAN, where the request message is used to request latency data between a DU and a CU-UP that are managed by the RAN, and optionally, may further request latency data between the CU-UP and a first UPF. The request message may include an identifier of the CU-UP managed by the target RAN.

Step 602: The PCA module sends, to the target RAN, the latency data between the DU and the CU-UP that are managed by the target RAN, and optionally, may further send the latency data between the CU-UP and the first UPF.

Step 603: The target RAN selects, based on the latency data between the DU and the CU-UP, a transmission subpath, among transmission subpaths between the CU-UP and the first UPF, whose latency data is the smallest, uses a CU-UP in the transmission subpath whose latency is the smallest as a CU-UP that exits after the handover, and completes CU-UP selection. The RAN manages the CU-UP that exists after the handover to transmit a service of the terminal.

Optionally, the target RAN determines latency data of a transmission path between the DU and the first UPF based on the latency data between the DU and the CU-UP and the latency data between the CU-UP and the first UPF, selects a transmission path, among transmission paths from the DU to the CU-UP to the first UPF, whose latency data is the smallest, and uses a CU-UP in the transmission path whose latency data is the smallest as the CU-UP that exists after the handover.

Optionally, the PCA module selects, based on the latency data between the DU and the CU-UP, a transmission path, among transmission paths between the CU-UP and the first UPF, whose latency is the smallest, or determines, based on the latency data between the DU and the CU-UP and the latency data between the CU-UP and the first UPF, a transmission path, among transmission paths between the DU and the first UPF, whose latency is the smallest, and carries an identifier of a CU-UP in the transmission path whose latency is the smallest in a response message and sends the response message to the RAN.

Step 604: The target RAN sends an N2 path switch request path switch request to an AMF.

Step 605: The AMF sends an Nsmf_PDUSession_UpdateSMContext request to the SMF.

Step 604 and step 605 are the same as those in a current technology.

In the handover process, UPF selection also needs to be performed, because the CU-UP has already been determined through the foregoing process. When UPF selection is performed subsequently, latency data between the terminal and the CU-UP may not be considered. The RAN may further notify the SMF of the identifier of the selected CU-UP. In this way, when requesting latency data of a transmission subpath, the SMF does not need to request all transmission subpaths.

Step 606: The SMF sends a request message to the PCA module, and correspondingly, the PCA module receives the request message sent by the SMF, where the request is used to request latency data of each transmission subpath from the CU-UP to a second UPF, and the request message includes an identifier of a UPF managed by the SMF and the identifier of the CU-UP selected by the RAN.

Step 607: The PCA module sends a response message to the SMF, and correspondingly, the SMF receives the response message sent by the PCA module, where the response message includes a transmission subpath between the CU-UP and the first UPF, a transmission subpath between the first UPF and the second UPF, and latency data corresponding to the transmission subpaths. In the response message, each transmission subpath may be represented based on a device identifier group. The transmission subpaths sent by the PCA module to the SMF may be filtered based on the identifier of the UPF and the identifier of the CU-UP that are sent by the SMF.

Step 608: The SMF may determine a plurality of transmission paths from the CU-UP to the second UPF based on each transmission subpath in the response message, and use latency data corresponding to the transmission paths from the CU-UP to the second UPF as one of parameters for selecting the first UPF in a PDU session. For other parameters, refer to 23.501 6.3.3.3. After selecting the first UPF, the SMF may send an N4 session establishment request to the first UPF.

Optionally, the PCA module determines the latency data corresponding to the plurality of transmission paths from the CU-UP to the second UPF, and sends the latency data to the SMF. In this case, the SMF does not need to perform this process.

FIG. 7 is a schematic diagram of a latency optimization process in which UE is handed over based on an N2 interface.

Step 701: An SMF sends a request message to a PCA module, and correspondingly, the PCA module receives the request message sent by the SMF, where the request is used to request latency data of each transmission subpath from a terminal to a second UPF, and the request message includes an identifier of a UPF managed by the SMF.

Step 702: The PCA module sends a response message to the SMF, and correspondingly, the SMF receives the response message sent by the PCA module, where the response message includes a transmission subpath between the terminal and a DU, a transmission subpath between the DU and a CU-UP, a transmission subpath between the CU-UP and a first UPF, a transmission subpath between the first UPF and a second UPF, and latency data corresponding to the transmission subpaths. In the response message, each transmission subpath may be represented based on a device identifier group. The transmission subpaths sent by the PCA module to the SMF may be filtered based on the identifier of the UPF sent by the SMF.

Step 703: The SMF may determine a plurality of transmission paths from the terminal to the second UPF based on each transmission subpath in the response message, and use latency data corresponding to the transmission paths from the terminal to the second UPF as one of parameters for selecting the first UPF. For other parameters, refer to 23.701 6.3.3.3.

Optionally, the PCA module determines the latency data corresponding to the plurality of transmission paths from the terminal to the second UPF, and sends the latency data to the SMF. In this case, the SMF does not need to perform this process.

In a PDU session establishment process, after selecting the first UPF, the SMF may perform the following steps.

Step 704a: The SMF sends an N4 session establishment request to the selected first UPF.

Step 704b: The UPF sends an N4 session establishment response to the SMF.

Step 704c: The SMF sends an Nsmf_PDUSession_UpdateSMContext response message to an AMF.

Step 704d: The AMF sends a handover request to the RAN.

Step 704a to step 704d are the same as those in a current technology.

In the PDU session establishment process, CU-UP selection also needs to be performed. In an optional solution, the RAN or the CU-CP requests, from the PCA module, an identifier of the CU-UP for establishing a PDU session. As a result of the above process, the first UPF has been determined. When performing CU-UP selection subsequently, the SMF may further notify the RAN of the identifier of the selected first UPF. In this way, when requesting latency data of a transmission subpath, the RAN does not need to request all transmission subpaths.

Step 705: The RAN sends a request message to the PCA module, and correspondingly, the PCA module receives the request message sent by the RAN, where the request is used to request latency data of each transmission subpath from the terminal to the first UPF, and the request message includes an identifier of each CU-UP managed by the CU-CP and the identifier of the first UPF selected by the SMF.

Step 706: The PCA module sends a response message to the RAN, and correspondingly, the RAN receives the response message sent by the PCA module, where the response message includes the transmission subpath between the terminal and the DU, the transmission subpath between the DU and the CU-UP, the transmission subpath between the CU-UP and the first UPF, and the latency data corresponding to the transmission subpaths. In the response message, each transmission subpath may be represented based on a device identifier group. The transmission subpaths sent by the PCA module to the RAN may be filtered based on the identifier of the first UPF and the identifier of the CU-UP that are sent by the RAN.

Step 707: The RAN may determine, based on each transmission subpath in the response message, a transmission path, among transmission paths from the terminal to the first UPF, whose latency is the smallest, and use a CU-UP in the transmission path whose latency is the smallest as a selected CU-UP in the PDU session. The RAN transmits a terminal service with the selected CU-UP.

Optionally, the PCA module determines a transmission path, among transmission paths from the terminal to the first UPF, whose latency is the smallest based on the transmission subpath between the terminal and the DU, the transmission subpath between the DU and the CU-UP, the transmission subpath between the CU-UP and the first UPF, and the latency data corresponding to the transmission subpaths, and sends an identifier of a CU-UP in the transmission path whose latency is the smallest to the CU-CP in the RAN.

To implement access by a terminal to a service platform and implement MEC service transmission, an MEAO may deploy devices on a transmission path. An embodiment of this application provides an existing deployment manner: First, deploy a UPF; select a service node to deploy the service platform, for example, an MEC platform; obtain latency data between the terminal and the service platform; and determine whether the obtained latency data meets a latency requirement from the terminal to the service platform. If the obtained latency data does not meet the latency requirement, the UPF and the service platform are redeployed.

Because it is unclear which phase causes the latency to fail to meet the service requirement, the UPF needs to be redeployed and the service platform needs to be redeployed until the latency data between the terminal and the service platform meets the latency requirement from the terminal to the service platform. During this process, a plurality of times of deployment and commissioning are required, and this brings service deployment test costs and low deployment efficiency.

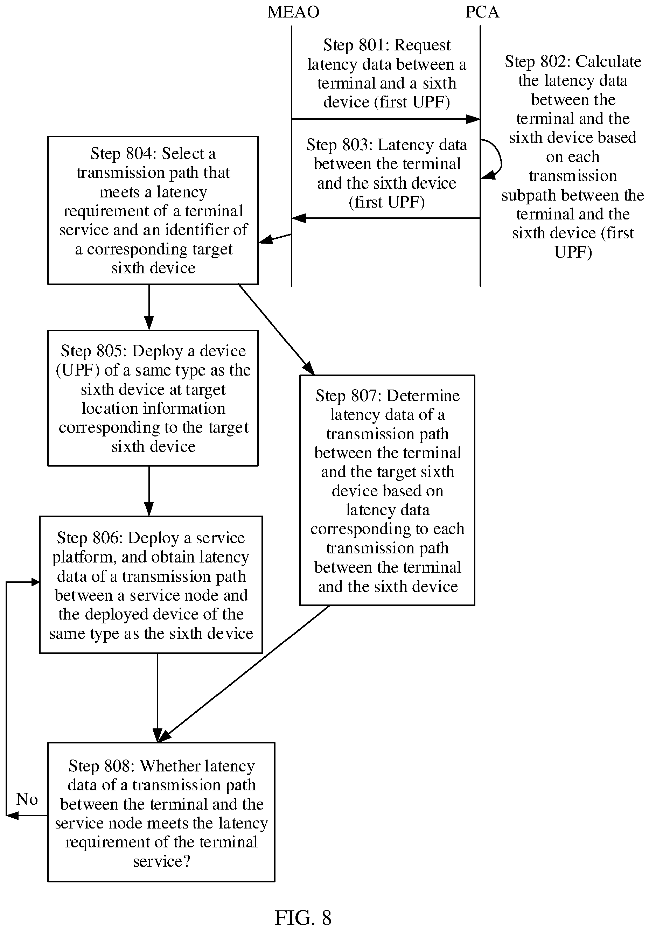

FIG. 8 is a schematic diagram of a latency optimization process of device deployment.

Step 801: An MEAO sends a request message to a first device, where the request message includes identifiers of a plurality of sixth devices, the request message is used to obtain latency data of a second transmission path, and the second transmission path is a transmission path between a terminal and a sixth device corresponding to each identifier in the request message. The sixth device may be a first UPF.

Correspondingly, the first device receives the request message sent by the MEAO. A second device is of a same type as a device instance to be deployed by the MEAO.

Step 802: The first device calculates latency data of each second transmission path based on obtained latency data corresponding to transmission subpaths.

For example, the first device obtains latency data of a second transmission path between the terminal and each first UPF in the request message based on latency data of a transmission subpath between the terminal and a DU, latency data of a transmission subpath between the DU and a CU-UP, and latency data of a transmission subpath between the CU-UP and a UPF.

As shown in FIG. IE, there may be a plurality of transmission paths between the terminal and any first UPF.

Step 803: The first device sends a response message to the MEAO, where the response message includes a plurality of second transmission paths and the latency data corresponding to each second transmission path.

Correspondingly, the MEAO receives the response message sent by the first device. Specifically, each second transmission path in the response message is represented based on identifiers in device identifier groups, for example, may be represented based on a device identifier group including a terminal identifier and a DU identifier, a device identifier group including a DU identifier and a CU-UP identifier, and a device identifier group including a CU-UP identifier and a UPF identifier. The three identifier groups represent one second transmission path. Certainly, redundancy may alternatively be removed, and then the DU identifier, the CU-UP identifier, and the UPF identifier are used to indicate one second transmission path. A plurality of device identifier groups that separately and correspondingly represent each second transmission path include an identifier of a sixth device in the request message. If the sixth device is a first UPF, the plurality of device identifier groups corresponding to one second transmission path definitely include an identifier of one first UPF.

Step 804: The MEAO first selects, based on the latency data corresponding to each second transmission path in the response message, a target second transmission path that meets a latency requirement of a terminal service, and selects an identifier of a target sixth device from at least one identifier of at least one sixth device corresponding to at least one selected target second transmission path.

A second transmission path that meets the latency requirement of the terminal service is referred to as the target second transmission path, and the target second transmission path may be understood as a transmission path, between the terminal and a sixth device, whose latency data is less than a set latency value, or a transmission path, between the terminal and a sixth device, corresponding to latency data which is the smallest. There may be one or more target second transmission paths.

The MEAO may also send the latency requirement of the terminal service to the first device. The first device selects, based on the latency data corresponding to each second transmission path, the target second transmission path that meets the latency requirement of the terminal service. In this case, the response message sent by the first device to the MEAO includes the target second transmission path. The response message may specifically include a plurality of device identifier groups used to represent a plurality of transmission subpaths that form the target second transmission path.

Each target second transmission path corresponds to an identifier of one sixth device. If there is one target second transmission path, there may correspondingly be identifiers of a plurality of sixth devices. The MEAO may select an identifier of a target sixth device from sixth devices corresponding to a plurality of target second transmission paths.

Step 805: The MEAO determines, based on location information corresponding to the identifier of each sixth device, target location information corresponding to the selected identifier of the target sixth device, and deploys a device of a same type as the sixth device at the target location information. If the sixth device is a first UPF, the device of the same type as the sixth device is also a UPF.

During device deployment, a deployment location may be selected by using previously tested latency data of each transmission subpath, so that a UPF deployment location meets a service requirement of a terminal, and a latency in a data transmission process is optimized.

Step 806: The MEAO selects a service node, deploys a service platform, and obtains latency data of a transmission path between the service node and the deployed device of the same type as the sixth device.

The MEAO may select the service node based on an APP requirement and a virtual resource requirement.

Step 807: The MEAO determines latency data of a transmission path between the terminal and the target sixth device based on latency data corresponding to each transmission path between the terminal and the sixth device in the second message.

A sequence of step 806 and step 807 is not limited.

Step 808: The MEAO determines, based on the latency data of the transmission path between the terminal and the target sixth device and the obtained latency data of the transmission path between the service node and the deployed device of the same type as the sixth device, whether latency data of a transmission path between the terminal and the service node meets the latency requirement of the terminal service. If the latency data of the transmission path between the terminal and the service node does not meet the latency requirement of the terminal service, step 806 is performed. The MEAO selects a new service node to deploy the service platform, then step 808 is performed, and step 807 does not need to be repeatedly performed. The MEAO may also delete the deployed service platform when the latency requirement is not met.

Latency data from the terminal to the service platform is obtained by segment, when the latency data from the terminal to the service platform does not meet the service requirement of the terminal, only the service platform needs to be redeployed, and a UPF between the terminal and the service platform does not need to be redeployed. Therefore, the service platform can be efficiently deployed.

Based on a same technical concept as the latency obtaining method, an embodiment of this application further provides a latency obtaining system. The system includes a first device, a second device, and a third device that are configured to perform the latency obtaining method in FIG. 2, FIG. 3A, FIG. 3B, and FIG. 3C.

Based on a same technical concept as the latency optimization method, an embodiment of this application further provides a latency optimization system. The system includes an SMF, a UPF, a PCA module, and a RAN that are configured to perform the latency optimization method in FIG. 4 to FIG. 7, and may further include an AMF and the like, or include a first device and an MEAO that are used to perform the latency optimization method in FIG. 8.

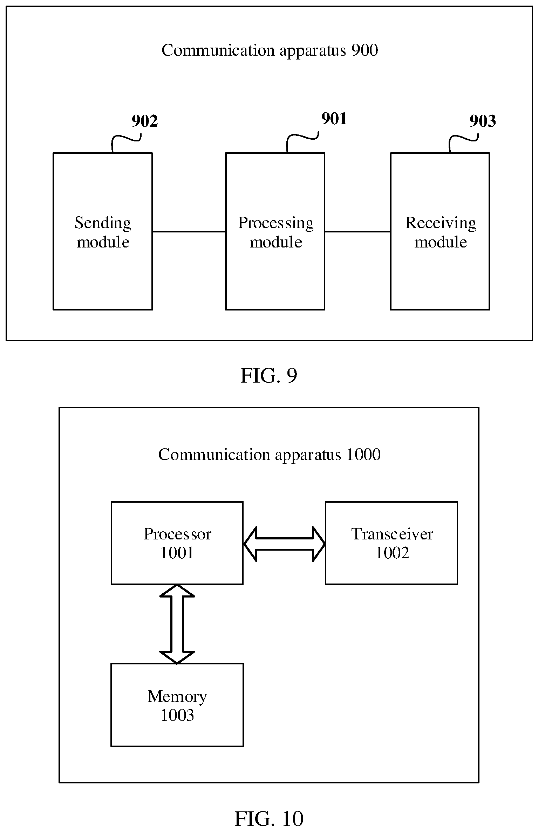

Based on a same technical concept as the latency obtaining method or the latency optimization method, as shown in FIG. 9, an embodiment of this application further provides a communication apparatus 900. The communication apparatus 900 may be configured to perform operations performed by the first device and the second device in the latency obtaining method in FIG. 2, FIG. 3A, FIG. 3B, and FIG. 3C. In this case, the communication apparatus 900 may be referred to as a latency obtaining apparatus. The communication apparatus 900 may be further configured to perform operations performed by the first device, the fourth device, the SMF, the UPF, the PCA module, and the RAN in the latency optimization method in FIG. 4 to FIG. 7. In this case, the communication apparatus 900 may be referred to as a latency optimization apparatus, and may be further configured to perform operations performed by the first device and the MEAO in the latency optimization method in FIG. 8.

The communication transmission apparatus 900 includes a processing module 901, a sending module 902, and a receiving module 903. The processing module 901 is configured to process data, the sending module 902 is configured to send data, and the receiving module 903 is configured to receive data.

When the communication apparatus performs the steps performed by the first device, for example, the sending module 902 is configured to send a request message to a second device, where the request message is used to obtain latency data of a transmission subpath between the second device and a third device, and a transmission path can be directly established between the third device and the second device.

The receiving module 903 is configured to receive a response message sent by the second device, where the response message includes the latency data of the transmission subpath between the second device and the third device.

The processing module 901 is configured to store a correspondence between the transmission subpath and the latency data, where the transmission subpath is represented based on a device identifier group including an identifier of the second device and an identifier of the third device.

When the communication apparatus performs the steps performed by the fourth device, for example, the sending module 902 is configured to send a request message to a first device, where the request message is used to obtain latency data of a first transmission subpath, the request message includes an identifier of each seventh device managed by the fourth device, and the first transmission subpath is a transmission subpath represented by a device identifier group in which the identifier of the seventh device is located.

The receiving module 903 is configured to receive a response message sent by the first device, where the response message includes a device identifier group used to represent each first transmission subpath, and latency data corresponding to the first transmission subpath.

The processing module 901 is configured to: select a target device identifier group based on the response message and a latency requirement of a terminal service, and control a target seventh device in the target device identifier group to establish a transmission path to another device, where the established transmission path is used for transmission of the terminal service.

Based on a same technical concept as the latency obtaining method and/or the latency optimization method, as shown in FIG. 10, an embodiment of this application further provides a communication apparatus 1000. The communication apparatus 1000 is configured to perform operations in the latency obtaining method and/or the latency optimization method.

The communication apparatus 1000 includes a processor 1001 and a transceiver 1002, and optionally, further includes a memory 1003. The processor 1001 is configured to invoke a group of programs; and when the programs are executed, the processor 1001 is enabled to perform operations in the latency obtaining method and/or the latency optimization method. The memory 1003 is configured to store the programs executed by the processor 1001. The processing module 901 in FIG. 9 may be implemented by using the processor 1001, and the sending module 902 and the receiving module 903 may be implemented by using a communication interface 1002.

The processor may be a central processing unit (central processing unit, CPU), a network processor (network processor, NP), or a combination of a CPU and an NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL) and another programmable logic device, a discrete gate or a transistor logic device, a discrete hardware component, or any combination thereof. The general-purpose processor may be a microprocessor, or the processor may be any conventional processor, or the like.

It may be further understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An embodiment of this application provides a computer storage medium, and the computer storage medium stores a computer program. The computer program includes instructions used to perform the latency obtaining method and/or the latency optimization method.

An embodiment of this application provides a computer program product including instructions. When the computer program product runs on a computer, the computer is enabled to perform the provided latency obtaining method and/or latency optimization method.

Any communication apparatus provided in the embodiments of this application may alternatively be a chip.

Persons skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

The computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

The computer program instructions may be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application are described, persons skilled in the art may make changes and modifications to the embodiments once they learn the basic inventive concept. Therefore, the following claims are intended to be construed as to cover the preferred embodiments and all changes and modifications falling within the scope of this application.

Certainly, persons skilled in the art may make various modifications and variations to the embodiments of this application without departing from the spirit and scope of the embodiments of this application. This application is intended to cover the modifications and variations provided that they fall within the scope of protection defined by the following claims and their equivalent technologies.

## Claims

1. A latency obtaining method, comprising:
sending, by a first device, a request message to a second device, wherein the request message is used to obtain latency data of a transmission subpath between the second device and a third device, and a transmission path can be directly established between the third device and the second device;
receiving, by the first device, a response message sent by the second device, wherein the response message comprises the latency data of the transmission subpath between the second device and the third device; and
storing, by the first device, a correspondence between the transmission subpath and the latency data, wherein the transmission subpath is represented based on a device identifier group comprising an identifier of the second device and an identifier of the third device.

2. The method according to claim 1, wherein if the second device is an access network device, the third device is a core network device or a terminal; or
if the second device is a core network device, the third device is a core network device; and
if the third device is the terminal, identifiers of all third devices in the correspondence that is between the transmission subpath and the latency data and that is stored by the first device are the same.

3. The method according to claim 2, wherein the core network device comprises a user plane CU-UP network element and a distributed unit DU, the access network device comprises a first user plane function UPF network element and a second UPF, the first UPF is a device that directly establishes a transmission path to the access network device, and the second UPF is a device that does not directly establish a transmission path to the access network device; and
if the second device is the CU-UP, the third device is the DU or the first UPF;
if the second device is the DU, the third device is the terminal; or
if the second device is the first UPF, the third device is the second UPF.

4. The method according to claim 3, wherein the second device is the CU-UP or the DU; the sending, by a first device, a request message to a second device comprises:
sending, by the first device, the request message to a control plane CU-CP network element, wherein the CU-CP sends the request message to the second device; and
the receiving, by the first device, a response message sent by the second device comprises:
receiving, by the first device, the response message sent by the CU-CP, wherein the response message is sent by the second device to the CU-CP.

5. The method according to claim 3, wherein the second device is the first UPF;
the sending, by a first device, a request message to a second device comprises:
sending, by the first device, the request message to a session management function SMF network element, wherein the SMF sends the request message to the second device; and
the receiving, by the first device, a response message sent by the second device comprises:
receiving, by the first device, the response message sent by the SMF, wherein the response message is sent by the second device to the SMF.

6. A latency optimization method based on the latency obtaining method according to any one of claims 1 to 5, comprising:
receiving, by a first device, a request message sent by a fourth device, wherein the request message is used to obtain a first transmission path that meets a latency requirement of a terminal service, the first transmission path is a transmission path between a terminal and a core network device, and the request message comprises an identifier of each device managed by the fourth device; and determining, by the first device based on the identifier that is of each device and that is comprised in the request message and a stored correspondence between a plurality of transmission subpaths and latency data, a plurality of transmission subpaths corresponding to latency data that can meet the latency requirement, wherein the determined plurality of transmission subpaths form a target first transmission path.

7. The method according to claim 6, wherein the method further comprises:
sending, by the first device, a response message to the fourth device, wherein the response message comprises an identifier of a fifth device and an identifier that is of another device and that forms a device identifier group with the identifier of the fifth device, to enable the fourth device to control, based on the response message, the fifth device to establish a transmission path to the another device, wherein the established transmission path is used for transmission of the terminal service.

8. The method according to claim 7, wherein if the fourth device is an SMF, a plurality of devices managed by the fourth device are a plurality of first UPFs; or
if the fourth device is a CU-CP, a plurality of devices managed by the fourth device are a plurality of CU-UPs.

9. The method according to claim 6, wherein if the fourth device is an SMF, a plurality of devices managed by the fourth device are a plurality of first UPFs; and the method further comprises:
sending, by the first device, a response message to the fourth device, wherein the response message comprises device identifier groups that respectively and correspondingly represent the plurality of transmission subpaths that form the target first transmission path, to enable the fourth device to respectively send the device identifier groups in the response message to different management devices that each can control a device corresponding to each device identifier in the device identifier group to establish a transmission path, so as to enable the different management devices to each control the device corresponding to each device identifier to establish the transmission path, wherein the established transmission path is used for transmission of the terminal service.

10. A latency optimization method based on the latency obtaining method according to any one of claims 1 to 5, comprising:
sending, by an MEAO, a request message to a first device, wherein the request message comprises identifiers of a plurality of sixth devices, the request message is used to obtain latency data of a second transmission path, and the second transmission path is a transmission path between a terminal and a sixth device corresponding to each identifier in the request message;
receiving, by the MEAO, a response message sent by the first device, wherein the response message comprises device identifier groups respectively used to represent a plurality of transmission subpaths that form each second transmission path, and latency data corresponding to the second transmission path; and
selecting, by the MEAO based on the latency data that corresponds to each second transmission path and that is in the response message, a target second transmission path that meets a latency requirement of a terminal service, determining an identifier of a target sixth device corresponding to the selected target second transmission path, determining, based on location information corresponding to an identifier of each sixth device, target location information corresponding to the selected identifier of the target sixth device, and deploying a device of a same type as the sixth device at the target location information.

11. The method according to claim 10, wherein after the deploying a device of a same type as the sixth device at the target location information, the method further comprises:
deploying, by the MEAO, a service platform, obtaining latency data of a transmission path between the service platform and the deployed device of the same type as the sixth device, and determining latency data of a transmission path between the terminal and the target sixth device based on the latency data that corresponds to each second transmission path and that is in a second message;
determining, by the MEAO based on the latency data of the transmission path between the terminal and the target sixth device and the obtained latency data of the transmission path between the service platform and the deployed device of the same type as the sixth device, whether latency data of a transmission path between the terminal and the service platform meets the latency requirement of the terminal service; and
if the latency data of the transmission path between the terminal and the service platform does not meet the latency requirement of the terminal service, redeploying the service platform.

12. The method according to claim 10 or 11, wherein the sixth device is a first UPF.

13. A latency optimization method, comprising:
receiving, by a first device, a request message sent by an MEAO, wherein the request message comprises identifiers of a plurality of sixth devices, the request message is used to obtain latency data of a second transmission path, and the second transmission path is a transmission path between a terminal and a sixth device corresponding to each identifier in the request message;
calculating, by the first device, latency data of each second transmission path based on obtained latency data corresponding to transmission subpaths; and
sending, by the first device, a response message to the MEAO, wherein the response message comprises a plurality of second transmission paths and the latency data corresponding to each second transmission path.

14. The method according to claim 13, wherein the sixth device is a first UPF.

15. A latency optimization method based on the latency obtaining method according to any one of claims 1 to 5, comprising:
sending, by a fourth device, a request message to a first device, wherein the request message is used to obtain latency data of a first transmission subpath, the request message comprises an identifier of each seventh device managed by the fourth device, and the first transmission subpath is a transmission subpath represented by a device identifier group in which the identifier of the seventh device is located; and
receiving, by the fourth device, a response message sent by the first device, wherein the response message comprises a device identifier group used to represent each first transmission subpath, and latency data corresponding to the first transmission subpath; and
selecting, by the fourth device, a target device identifier group based on the response message and a latency requirement of a terminal service, and controlling a target seventh device in the target device identifier group to establish a transmission path to another device, wherein the established transmission path is used for transmission of the terminal service.

16. The method according to claim 15, wherein if the fourth device is an SMF, the seventh device is a first UPF; or
if the fourth device is a CU-CP, the seventh device is a CU-UP.

17. A latency optimization method based on the latency obtaining method according to any one of claims 1 to 5, comprising:
receiving, by a first device, a request message sent by a fourth device, wherein the request message is used to obtain latency data of a first transmission subpath, the request message comprises an identifier of each seventh device managed by the fourth device, and the first transmission subpath is a transmission subpath represented by a device identifier group in which the identifier of the seventh device is located; and
sending, by the first device, a response message to the fourth device, wherein the response message comprises a device identifier group used to represent each first transmission subpath, and latency data corresponding to the first transmission subpath.

18. The method according to claim 17, wherein if the fourth device is an SMF, the seventh device is a first UPF; or
if the fourth device is a CU-CP, the seventh device is a CU-UP.

19. A data transmission apparatus, configured to implement the method according to any one of claims 1 to 5, the method according to any one of claims 6 to 9, the method according to any one of claims 10 to 12, the method according to either of claims 13 and 14, the method according to either of claims 15 and 16, or the method according to either of claims 17 and 18.

20. A computer-readable storage medium, wherein the computer storage medium stores computer-readable instructions; and when the computer-readable instructions are run, an apparatus is enabled to perform the method according to any one of claims 1 to 5, the method according to any one of claims 6 to 9, the method according to any one of claims 10 to 12, the method according to either of claims 13 and 14, the method according to either of claims 15 and 16, or the method according to either of claims 17 and 18.

21. A computer program product, wherein when a computer reads and executes the computer program product, the computer is enabled to perform the method according to any one of claims 1 to 5, the method according to any one of claims 6 to 9, the method according to any one of claims 10 to 12, the method according to either of claims 13 and 14, the method according to either of claims 15 and 16, or the method according to either of claims 17 and 18.

22. A chip, wherein the chip is coupled to a memory, and is configured to: read and execute a software program stored in the memory, to implement the method according to any one of claims 1 to 5, the method according to any one of claims 6 to 9, the method according to any one of claims 10 to 12, the method according to either of claims 13 and 14, the method according to either of claims 15 and 16, or the method according to either of claims 17 and 18.
